# EUROPÄISCHE PATENTSCHRIFT

(11) **EP 0 847 488 B1**
(45) Veröffentlichungstag und Bekanntmachung des Hinweises auf die Patenterteilung: **03.11.1999**
(21) Anmeldenummer: 96937983.3
(22) Anmeldetag: 31.08.1996
(51) Int. Cl.: F02B 75/06, H02P 7/00

(54) **ANTRIEBSSYSTEM, INSBESONDERE FÜR EIN KRAFTFAHRZEUG**
DRIVE SYSTEM, IN PARTICULAR A DRIVE SYSTEM FOR A MOTOR VEHICLE
SYSTEME D'ENTRAINEMENT, NOTAMMENT POUR VEHICULE AUTOMOBILE

(30) Priorität: 31.08.1995 DE 19532128
(43) Veröffentlichungstag der Anmeldung: 17.06.1998
(73) Patentinhaber: ISAD Electronic Systems GmbH & Co.KG, 50733 Köln (DE); GRÜNDL UND HOFFMANN GmbH GESELLSCHAFT FÜR ELEKTROTECHNISCHE ENTWICKLUNGEN, 82319 Starnberg (DE)
(72) Erfinder: MASBERG, Ullrich, D-51503 Rösrath (DE); PELS, Thomas, D-46359 Heiden (DE); ZEYEN, Klaus-Peter, D-50670 Köln (DE); GRÜNDL, Andreas, D-81377 München (DE); HOFFMANN, Bernhard, D-82319 Starnberg (DE)
(74) Vertreter: von Samson-Himmelstjerna, Friedrich R., Dipl.-Phys.
(86) Internationale Anmeldenummer: DE9601617
(87) Internationale Veröffentlichungsnummer: WO9708437

(56) Entgegenhaltungen:
- EP-A- 0 354 790
- WO-A-95/02758
- DE-A- 4 423 577
- PATENT ABSTRACTS OF JAPAN vol. 013, no. 335 (M-856), 27.Juli 1989 & JP,A,01 113571 (MAZDA MOTOR CORP), 2.Mai 1989,
- PATENT ABSTRACTS OF JAPAN vol. 013, no. 484 (M-886), 2.November 1989 & JP,A,01 190922 (HITACHI LTD), 1.August 1989,

## Beschreibung

Die Erfindung betrifft ein Antriebssystem, insbesondere für ein Kraftfahrzeug.

Insbesondere bei Antriebssystemen, die einen Verbrennungsmotor als Antriebsaggregat haben, treten i.a. Ungleichförmigkeiten in der Drehung der Triebwelle des Verbrennungsmotors auf, welche in erster Linie von den Gas- und Massenkräften des Verbrennungsmotors herrühren. Derartige Drehungleichförmigkeiten können den Fahrkomfort beeinträchtigen und zum Verschleiß des Antriebssystems sowie anderer Teile z.B. eines Kraftfahrzeugs führen.

Aus der EP-A-0 354 790 ist es bekannt, einen Verbrennungsmotor eines Kraftfahrzeugs mit einem System zur aktiven Verringerung von Drehungleichförmigkeiten auszustatten. Die Wirkung dieses Systems beruht darauf, daß eine elektrische Maschine ein wechselndes pulsierendes Drehmoment erzeugt, welches den Drehungleichförmigkeiten entgegengerichtet ist und diese dadurch mindert. Weitere Beispiele solcher Systeme offenbaren Patent Abstracts of Japan, Band 11, Nr. 28 (M-557), 27. Januar 1987 & JP-A-61 200 333 (NISSAN I), Patent Abstracts of Japan, Band 4, Nr. 29 (M-002), 14. März 1980 & JP-A-55 005 454 (TOYOTA), EP-B-0 427 568 (ISUZU), DE-A-32 30 607 (VW), EP-B-0 175 952 und US-A-4 699 097 (MAZDA), Patent Abstracts of Japan, Band 7, Nr. 240 (M-251), 25. Oktober 1983 & JP-A-58 126 434 (NISSAN II), DE-A-41 00 937 (FICHTEL & SACHS), EP-A-0 604 979 (NIPPONDENSO), EP-A-0 385 311 (NISSAN/HITACHI), EP-A-0 338 485 (HITACHI) und US-A-5 109 815 (HITACHI II).

Es wird folgender fernliegender Stand der Technik genannt: DE-B-43 91 898, DE-A-27 04 533, EP-A-0 437 266, DE-A-44 37 322, DE-A-40 11 291, DE-A-32 43 513, DE-A-38 14 484, DE-A-33 38 548, DE-B-44 08 719, DE-A-39 37 082.

Bei entsprechend ausgerüsteten Antriebssystemen ist also eine aktive Verringerung von Drehungleichförmigkeiten grundsätzlich möglich.

Die Erfindung geht von dem technischen Problem aus, solche Antriebsysteme weiterzubilden und zu vereinfachen.

Sie löst dieses Problem gemäß einem ersten Aspekt der Erfindung mit einem Antriebssystem, insbesondere für ein Kraftfahrzeug, mit
- einem Verbrennungsmotor,
- einer auf die Kurbelwelle des Verbrennungsmotors oder eine damit gekoppelten Welle wirkenden elektrischen Maschine, die als Starter/Generator fungiert, wobei die elektrische Maschine eine durch einen Wechselrichter gesteuerte Drehstrommaschine ist, und
- einem Mikrocomputer-Steuergerät, welches sowohl den Verbrennungsmotor als auch den Wechselrichter der aktivdämpfenden elektrischen Maschine steuert (Anspruch 1).

Gemäß einem zweiten Aspekt stellt die Erfindung ein Antriebsystem, insbesondere für ein Kraftfahrzeug bereit, mit
- einem Verbrennungsmotor,
- einer auf die Kurbelwelle des Verbrennungsmotors oder einer damit gekoppelten Welle wirkenden elektrischen Maschine, die als Starter/Generator fungiert, wobei die elektrische Maschine durch einen Wechselrichter mit einer Taktfrequenz von wenigstens 10 kHz gesteuert wird,
- einem Kurbelwellenwinkelsensor mit einer Genauigkeit von wenigstens 0,5 Grad,
wobei die vom Kurbelwellenwinkelsensor gelieferte Information sowohl der Steuerung des Verbrennungsmotors als auch der Steuerung der elektrischen Maschine dient (Anspruch 2).

Die Begriffe "Steuerung" und "steuern" werden hier in einem weiten Sinn verstanden, der neben "Steuerung" und "steuern" im engen Sinn ("ohne Rückkopplung") auch "Regelung" und "regeln" ("mit Rückkopplung") umfaßt.

Bei den Drehungleichförmigkeiten kann es sich insbesondere um solche handeln, die bei dem Verbrennungsmotor, insbesondere einem Hubkolbenmotor mit innerer Verbrennung, durch die auf die Kurbelwelle wirkenden Gas- und Massenkräfte der einzelnen Hubkolben auftreten. Beispielsweise treten bei einem Vierzylinder-Viertaktmotor relativ große Drehungleichförmigkeiten in der zweiten Ordnung (d.h. dem zweifachen der Drehfrequenz des Motors) auf. Daneben gibt es Drehungleichförmigkeiten bei höheren Ordnungen sowie stochastisch auftretende Ungleichförmigkeiten. Bei dem Verbrennungsmotor kann es sich z.B. um einen Zweitakt- oder Viertaktmotor mit gerader Zylinderzahl (z.B. 2, 4, 8, 10, 12 Zylinder usw.) oder ungerader Zylinderzahl (1, 3, 5, 7, 9, 11 usw. Zylinder) handeln (der z.B. nach dem Otto- oder dem Dieselprinzip arbeitet). Grundsätzlich kann es sich auch um einen andersartigen Verbrennungsmotor, wie z.B. einen Hubkolbenmotor mit äußerer Verbrennung (sog. Stirling-Motor) handeln. Eine andere Möglichkeit ist ein Kreiskolbenmotor (z.B. ein Wankelmotor), bei dem zumindest die Gaskräfte zu Drehungleichförmigkeiten führen können. Daneben kommen Turbinen, insbesondere Gas- oder Dampfturbinen in Frage. Bei ihnen sind die Drehungleichförmigkeiten im allgemeinen zwar nur klein; für bestimmte Anwendungen kann es jedoch auch bei ihnen auf besonders guten Rundlauf ankommen.

Die Drehungleichförmigkeiten müssen aber nicht (ausschließlich) von dem Antriebsaggregat (z.B. eines Kraftfahrzeugs, Schienenfahrzeugs oder Schiffes) herrühren. Es kann sich vielmehr auch um Drehungleichförmigkeiten handeln, die in einem Antriebsstrang - also zwischen dem Antriebsaggregat und dem Abtriebspunkt entstehen, etwa durch Kardangelenke, räumliche Wellenschwingungen oder Getriebeverschleiß.

Das Antriebssystem kann auch mit mehreren elektrischen Maschinen zur aktiven Verringerung von Drehungleichförmigkeiten ausgerüstet sein, z.B. könnte bei einem Kraftfahrzeug eine erste Maschine direkt auf die Triebwelle des Antriebsaggregats wirken, während eine zweite Maschine abwärts einer Kupplung, z.B. zwischen Kupplung und Getriebe zum Verringern von Drehungleichförmigkeiten des Triebstrangs dient.

Eine "elektrische Maschine" ist jede Art von Maschine für Rotationsbewegungen, die sowohl als elektrischer Motor wie auch als elektrische Bremse, ggf. als Generator betrieben werden kann.

Grundsätzlich kann die Kopplung der elektrischen Maschine mit dem Antriebsaggregat mittelbar sein, z.B. über ein Getriebe. Vorzugsweise handelt es sich jedoch um eine direkte Kopplung, bei der z.B. der Läufer der elektrischen Maschine - ähnlich einem Schwungrad - unmittelbar auf der Triebwelle des Antriebsaggregats oder einer ggf. koppelbaren Verlängerung dieser Welle sitzt.

Während bei dem eingangs zitierten Stand der Technik das Drehungleichförmigkeits-Verringerungssystem als vom Antriebsaggregat unabhängiges Zusatzsystem konzipiert ist, lehrt die Erfindung stattdessen, das Mikrocomputer-Steuergerät oder den Kurbelwellenwinkelsensor gemeinsam zur Steuerung der beiden Teilsysteme, also des Antriebsaggregats und der elektrischen Maschine zu nutzen. Auch eine Getriebesteuerung, etwa eines automatischen Getriebes, wird hier der Antriebsaggregat-Steuerung zugerechnet. Die gemeinsame Nutzung von Steuerelementen bezieht sich also auch auf das Paar "elektrische Maschine - Getriebe".

Selbstverständlich ist es auch möglich, diese beiden Aspekte gemeinsamer Nutzung miteinander zu vereinen, d.h. das Mikrocomputer-Steuergerät und den Kurbelwellenwinkelsensor gemeinsam für die Steuerung der elektrischen Maschine und des Antriebsaggregats zu nutzen.

Die Tatsache, daß die beiden Teilsysteme völlig unterschiedliche Funktionen haben, scheint zunächst für deren unabhängige Steuerung zu sprechen, wie es im Stand der Technik vorgeschlagen wird. Die erfindungsgemäße gemeinsame Nutzung beruht demgegenüber auf der Erkenntnis, daß aufgrund der völlig unterschiedlichen Anforderungen an die beiden Teilsysteme Kurbelwellenwinkelsensoren bzw. daraus, abgeleitete Größen des einen Teilsystems genauer und/oder schneller als die des anderen arbeiten müssen, sowie daß die Steuereinrichtung eines der beiden Teilsysteme i.a. des einen Teilsystems zumindest hinsichtlich mancher Steueraufgaben genauer und schneller arbeitet als die des anderen Teilsystems. Beispielsweise steht zur Drehungleichförmigkeits-Verringerung i.a. ein sehr hochauflösender Kurbelwellenwinkelsensor bereit, von dem schnell und genau der momentane Kurbelwellenwinkel und ggf. auch die momentane Drehgeschwindigkeit abgeleitet wird; die Verwendung dieser Steuerelemente kann bei der Antriebsaggregatsteuerung (z.B. Steuerung des Zünd- und/oder Einspritzbeginn-Zeitpunkts) vorteilhaft sein. Entsprechendes gilt, wenn eines der Teilsysteme eine sehr leistungsfähige und schnelle Steuer- bzw. Regeleinrichtung, z.B. in Form eines Hochleistungscomputer-Systems aufweist. Zum Beispiel kann eine sehr hochfrequente Steuereinrichtung der elektrischen Maschine zu einem Geschwindigkeitszuwachs in der Steuerung bzw. Regelung des Antriebsaggregats führen. Ferner kann es - falls in einem oder beiden Teilsystemen eine Steuerung auf (rückgekoppelter) Regelung beruht - bei unabhängiger Steuerung der beiden Teilsysteme in bestimmten Fällen zu Steuerinterferenzen und -instabilitäten kommen, was durch die gemeinsame Steuerung vermieden wird.

Das erfindungsgemäße Antriebssystem hat somit folgende Vorteile:
- es erlaubt eine genauere und schnellere Steuerung;
- es hilft, Steuerinterferenzen und -instabilitäten zu vermeiden; und
- es vereinfacht das Gesamtsystem und führt so zu einer Kosteneinsparung und Reduzierung von Störquellen.

Vorzugsweise können weitere Sensoren oder daraus abgeleitete Größen gemeinsam genutzt werden, Lastzustand, Temperatur, Abgaszusammensetzung, Verbrennungsluftmenge bzw. -masse, Drosselklappenstellung, Kraftstoffmenge, Einspritzzeitpunkt, Gasdruck, jeweils des Antriebsaggregats; zum Antrieb der elektrischen Maschine dienender Strom, Zwischenkreisspannung, Frequenz, Phase, Schaltzustände von Wechselrichterschaltern, jeweils des Wechselrichters (falls vorhanden) ; Winkelstellung, Drehzahl, Winkelbeschleunigung, Drehmoment, jeweils der elektrischen Maschine; Geschwindigkeit, Längs- und Querbeschleunigung, jeweils des Fahrzeugs; Drehzahl der Getriebeabtriebswelle; Winkelstellung, Drehzahl, Winkelbeschleunigung, jeweils eines oder mehrerer Fahrzeugräder; Schlupf eines oder mehrerer Antriebsräder; Zylinderabschalt-und/oder -anschaltsignal. Aus den elektrischen Größen Strom, Zwischenkreisspannung Frequenz, Phase, und/oder aus Schaltzuständen von Wechselrichterschaltern kann ohne weitere Sensoren auf den momentanen Fluß, das momentane Drehmoment und die momentane Drehzahl geschlossen werden.

Die gemeinsame Steuerung der beiden Teilsysteme braucht nicht etwa permanent vorzuliegen. Es kann vielmehr vorteilhaft sein, daß das für die Steuerung der elektrischen Maschine bzw. des Antriebsaggregats zuständige Steuergerät das Antriebsaggregat bzw. die elektrische Maschine nur während bestimmter Betriebszustände teilweise oder ganz steuert (Anspruch 3). Wenn beispielsweise im Leerlaufbetrieb des Antriebsaggregats eine Antriebsaggregat-Steuereinrichtung die Leerlaufdrehzahl durch rückgekoppelte Regelung konstant zu halten sucht und gleichzeitig die elektrische Maschine zur Drehungleichförmigkeits-Verringerung wechselnde Drehmomente auf die Triebwelle ausübt, kann es zu Regelinterferenzen kommen. Läßt man hingegen das für die elektrische Maschine zuständige Steuergerät auch die Steuerung der Leerlaufdrehzahl des Antriebsaggregats übernehmen (oder umgekehrt), so kann man derartige Steuerinterferenzen ausschließen. In anderen Betriebszuständen jenseits des Leerlaufbetriebs kann die Steuerung der beiden Teilsysteme hingegen getrennt durchgeführt werden.

Das für die Steuerung der elektrischen Maschine zuständige Mikrocomputer-Steuergerät ist - da sie einen Wechselrichter ansteuert - sehr schnell und leistungsfähig und kann daher vorteilhaft eine oder mehrere der folgenden Steueraufgaben zur Steuerung (oder auch rückgekoppelten Regelung) des Antriebsaggregats teilweise oder ganz übernehmen: Drehzahlsteuerung (inbesondere im Leerlauf), Kraftstoffzufuhrsteuerung, Drosselklappensteuerung (insbesondere im Leerlauf) , Kraftstoffeinspritz-Steuerung, Zündungssteuerung, Ventilsteuerung (bei Motoren mit verstellbaren Ventilsteuerzeiten oder elektromagnetisch betätigten Ventilen), Kühlungssteuerung (z.B. bei Antriebssystemen mit hohem Kühlmitteltemperaturniveau (z.B. 130° C) und aktiver Kühlung), Abgasreinigungssteuerung (z.B. Lambdasteuerung), Abgasrückführungssteuerung, Klopfregelung, Ladedruckregelung, Zylinderabschaltung, Start-Stop-Steuerung, Getriebesteuerung (Anspruch 4).

Grundsätzlich ist es jedoch auch möglich, daß das für die Steuerung des Antriebsaggregats zuständige Mikrocomputer-Steuergerät eine oder mehrere der folgenden Steueraufgaben zur Steuerung der elektrischen Maschine teilweise oder ganz übernimmt: Drehmomentsteuerung, direkte oder indirekte Ansteuerung von Wechselrichter-Schaltern, Steuerung einer Starterfunktion (falls die elektrische Maschine auch als Starter fungiert), Steuerung einer Zusatzdrehmoment-Funktion, insbesondere Generatorfunktion (falls die elektrische Maschine auch als Generator fungiert) oder einer elektromagnetischen Kupplungs- und/oder Synchronisierungsfunktion (falls die elektrische Maschinen diese Funktionen ausführt).

Diese beiden Möglichkeiten sind im übrigen in dem Grenzfall deckungsgleich, in dem ein gemeinsames Steuergerät die gesamte Steuerung sowohl des Antriebsaggregats als auch der elektrischen Maschine übernimmt.

Die elektrische Maschine ist gemäß dem ersten Aspekt- eine Dreh- oder Wanderfeldmaschine. Unter "Drehfeldmaschine" wird - im Gegensatz zu einer Stromwendermaschine - eine Maschine verstanden, in der ein magnetisches Drehfeld auftritt. Hierbei kann es sich z.B. um eine Asynchron- oder Synchronmaschine, insbesondere für Dreiphasenstrom, oder um eine Maschine mit elektronischer Kommutierung handeln. Bei einer Drehfeldmaschine überstreicht das magnetische Feld einen vollen 360°-Grad-Umlauf, bei einer Wanderfeldmaschine hingegen nur einen oder mehrere Ausschnitte hiervon. Bei der Wanderfeldmaschine kann es sich also z.B. um eine Asynchron- oder Synchronmaschine handeln, deren Ständer sich nur über einen oder mehrere Sektoren des Läufers erstreckt - ähnlich einem bzw. mehreren gekrümmten Linearmotor(en).

Das Antriebssystem weist wenigstens einen Wechselrichter zum Erzeugen der für die magnetischen Felder der elektrischen Maschine benötigten Spannungen und/oder Ströme variabler Frequenz, Amplitude und/oder Phase auf. Der Wechselrichter kann die für die magnetischen Felder (insb. Dreh- bzw. Wanderfelder) benötigten Spannungen und/oder Ströme mit (innerhalb gewisser Grenzen) frei wählbarer Frequenz, Amplitude oder Phase oder beliebiger Kombinationen dieser Größen erzeugen. Er kann dies vorteilhaft mit Hilfe elektronischer Schalter aus einer vorgegebenen Gleich- oder Wechselspannung oder einem vorgegebenen Gleich- oder Wechselstrom tun (sog. Pulswechselrichter). Besonders vorteilhaft sind alle drei Größen - Frequenz, Amplitude und Phase - frei wählbar. Ein Wechselrichterantrieb hat u.a. den Vorteil, mit hoher Variabilität bei unterschiedlichsten Betriebszuständen und verschiedenartigsten Drehungleichförmigkeiten diese effektiv verringern und in vielen Fällen praktisch vollständig unterdrükken zu können und einfach eine ggf. gewünschte Überlagerung eines Zusatz-Drehmoments mit gewünschter Stärke herbeiführen zu können.

Grundsätzlich kann die die elektrische Maschine so gesteuert werden, daß sie entweder nur Drehungleichförmigkeiten zum Schnellen hin (sog. positive Drehungleichförmigkeiten) oder zum Langsamen hin (sog. negative Drehungleichförmigkeiten) entgegenwirkt. Besonders wirksam ist jedoch eine Betriebsweise, bei der sie sowohl negativen als auch positiven Drehungleichförmigkeiten entgegenwirkt.

Dabei wird die elektrische Maschine vorzugsweise so gesteuert, daß sie zur Drehungleichförmigkeits-Veringerung ein schnell alternierendes, und zwar bei einer positiven Drehungleichförmigkeit ein bremsendes und bei einer negativen Drehungleichförmigkeit ein antreibendes Drehmoment erzeugt, dem sie vorteilhaft zur zusätzlichen Erzielung einer antreibenden Wirkung oder einer bremsenden oder generatorischen Wirkung zumindest zeitweise ein positives bzw. negatives Drehmoment überlagern kann (Anspruch 6). Bei Ausgestaltungen, bei denen die elektrische Maschine außerdem als elektromagnetische Kupplung wirkt, kann an die Stelle des schnell alternierend bremsenden und antreibenden Drehmoments ein schnell variierend größerer und kleinerer Kupplungsschlupf treten.

Unter einer "schnellen Variation" wird eine Variation im Frequenzbereich der zu verringernden Drehungleichförmigkeiten verstanden, also z.B. bei der Drehungleichförmigkeit der 2. Ordnung und bei einer Drehzahl von 3000 min⁻¹ eine Variation mit einer Frequenz von 100 Hz. Demgegenüber variiert das ggf. überlagerte Zusatz-Drehmoment - abgesehen von möglicherweise steilen Flanken am Anfang oder Ende der Überlagerung - im allgemeinen langsam oder ist konstant.

Durch die (insbesondere additive) Überlagerung des Zusatz-Drehmoments in der gewünschten Richtung und Stärke sind die Drehungleichförmigkeits-verringerung und die Zusatz-Drehmomenterzeugung voneinander entkoppelt. Das schnell variierende Drehmoment wird in seinem Verlauf durch die Überlagerung praktisch nicht verändert, nur gegenüber der Nullinie verschoben. Ausnahmsweise verändert sich das schnell variierende Drehmoment nur dann, falls der Verbrennungsmotor aufgrund der mit der Zuschaltung des Zusatz-Drehmoments einhergehenden Laständerung tätsächlich geänderte Drehungleichförmigkeiten zeigt.

Falls das momentan gelieferte Zusatz-Drehmoment kleiner als die momentane Amplitude des Wechsel-Drehmoments ist, zeigt das Gesamt-Drehmoment der elektrischen Maschine - wenn auch gegenüber der Nullinie verschoben - abwechselnd positive und negative Werte. Falls es hingegen größer ist, ist das Gesamt-Drehmoment nur positiv oder negativ, wobei dessen Betrag einen schnell variierenden Anteil enthält. Ein bremsendes Zusatz-Drehmoment kann dazu dienen, daß die elektrische Maschine den Kupplungsschlupf verringert, eine bremsende Synchronisier-Funktion ausübt, als Generator zur Stromversorgung fungiert und/oder eine Bremsung des Fahrzeugs herbeiführt oder unterstützt und/oder etwa im Rahmen einer Antriebs-Schlupf-Regelung durch Bremsen den Schlupf eines Antriebsrads verringert. Die bei Anwenden dieser Bremsfunktionen generatorisch gewonnene Bremsenergie (Zusatzdrehmoment-Bremsenergie) kann - wie die von Drehungleichförmigkeiten herrührende - gespeichert werden (z.B. in einem elektrischen Speicher oder in einem Schwungradspeicher) und als Antriebsenergie wiederverwendet oder in ein Netz oder z.B. die Fahrzeugbatterie eingespeist werden. Ein antreibendes Zusatz-Drehmoment kann einer beschleunigenden Synchronisierfunktion dienen oder eine Beschleunigung des Fahrzeugs unterstützen (die elektrische Maschine wirkt dann als "Booster") oder herbeiführen, beispielsweise um Beschleunigungslöcher, etwa bei einem Turbolader-Motor, zu füllen.

Um einen möglichst hohen Gesamtwirkungsgrad des Antriebssystems zu erzielen, wird vorteilhaft die beim Verringern einer positiven Drehungleichförmigkeit gewonnene Energie (Drehungleichförmigkeits-Bremsenergie) sowie ggf. die bei bremsendem Zusatz-Drehmoment gewonnene Energie (Zusatzdrehmoment-Bremsenergie) wenigstens teilweise gespeichert und die gespeicherte Drehungleichförmigkeits-Bremsenergie wird wenigstens teilweise zum Verringern einer negativen Drehungleichförmigkeit wiederverwendet (Anspruch 7).

Die Speicherung der Drehungleichförmigkeits-Bremsenergie sowie ggf. der Zusatzdrehmoment-Bremsenergie kann insbesondere durch einen elektrischen Speicher und/oder einen mechanischen Speicher (Schwungradspeicher). Als elektrischer Speicher kann beispielsweise eine Kapazität, Induktivität oder eine (schnelle) Batterie dienen. Vorteilhaft ist der Wechselrichter (falls vorhanden) ein Zwischenkreis-Wechselrichter, dessen Zwischenkreis wenigstens einen elektrischen Speicher für Bremsenergie aufweist oder mit wenigstens einem solchen gekoppelt ist. Der Speicher kann entweder ausschließlich der Speicherung von Bremsenergie dienen (in diesem Fall wäre er z.B. zusätzlich zu einem üblicherweise vorhandenen Zwischenkreis-Speicher geschaltet, welcher die beim Wechselrichter-Taktbetrieb erforderlichen Spannungs- bzw. Stromimpulse liefern kann), oder er kann nur teilweise der Speicherung der Bremsenergie dienen, also noch andere Energie - z.B. die zum Taktbetrieb nötige - speichern (im letzteren Fall könnte er z.B. mit dem üblichen Zwischenkreis-Speicher zusammenfallen). Im übrigen kann die Ausbildung des Stromrichters als Zwischenkreis-Stromrichter in jedem Fall - z.B. auch ohne Zwischenspeicherung von Bremsenergie - vorteilhaft sein.

Unter einem "Zwischenkreis" versteht man einen Kreis, welcher im wesentlichen Gleichspannung bzw. -strom liefern kann, aus der ein nachgeschalteter Wechselrichter-Teil (der sog. Maschinen-Wechselrichter) durch Pulsen oder Takten variable Wechselspannungen bzw. -ströme bilden kann. Diese Gleichspannung bzw. dieser Gleichstrom muß Spannungs- bzw. Stromimpulse mit extremer Flankensteilheit und auf hohem Spannungs- bzw. Stromniveau bereitstellen. Im allgemeinen umfaßt ein Zwischenkreis-Wechselrichter drei Baugruppen, und zwar eine Eingangsbaugruppe zur Versorgung mit bzw. Abfuhr von elektrischer Energie, eine Ausgangsbaugruppe in Form des Maschinen-Wechselrichters und den dazwischenliegenden Zwischenkreis.

Beim Schwungradspeicher zur Speicherung der Bremsenergie ist das Schwungrad vorzugsweise elektrisch über eine (zweite) elektrische Maschine mit dem System gekoppelt. Hierbei kann es sich z.B. um eine von einem eigenen Stromrichter gesteuerte Drehfeld- oder Stromwendermaschine handeln. Die elektrische Maschine zur Drehungleichförmigkeits-Verringerung und die Schwungrad-Maschine arbeiten im Gegentakt: Wenn erstere bremsend wirkt, beschleunigt zweitere das Schwungrad bzw. wenn erstere antreibend oder weniger bremsend wirkt, bremst zweitere das Schwungrad. Mit einem solchen Schwungrad-Energiespeicher können relativ hohe Energiedichten gespeichert werden können.

Die (erste) elektrische Maschine kann neben der aktiven Verringerung von Drehungleichförmigkeiten gleichzeitig oder zeitlich versetzt auch andere Funktionen ausführen und so herkömmlicherweise auf diese Funktionen spezialisierte Maschinen ersetzen. Insbesondere kann sie außerdem die Funktion eines Starters, z.B. für einen mit der Welle gekoppelten Verbrennungsmotor, und/oder die Funktion eines Generators zur Stromversorgung, z.B. zur Ladung einer Batterie oder Speisung eines Bordnetzes, haben (Anspruch 5). Während des Startvorgangs ist i.a. keine Drehungleichförmigkeits-Verringerung erforderlich; hierzu wird die elektrische Maschine vorübergehend als reiner Elektromotor betrieben. Die Generatorfunktion ist hingegen i.a. auch während der Drehungleichförmigkeits-Verringerung erwünscht. Durch Überlagerung des schnell variierenden Moments mit einem gleichförmig bremsendes Moment erreicht man im zeitlichen Mittel einen Gewinn elektrischer Energie.

Grundsätzlich kann die elektrische Maschine für die Startfunktion als Schwungradstarter ausgebildet sein (s. z.B. D. Henneberger "Elektrische Motorausrüstung", Braunschweig 1990, Seiten 98-103. Vorteilhaft ist sie jedoch so drehmomentstark ausgebildet, daß sie als Direktstarter dienen kann, d.h. das Antriebsaggregat im Zusammenlauf aus dem Stand starten kann. Vorzugsweise ist sie direkt, d.h. getriebelos mit der Triebwelle gekoppelt. Die Drehzahl des Läufers gleicht dann vorzugsweise der Drehzahl des Antriebsaggregats.

In entsprechender Weise kann die elektrische Maschine auch als Zusatzfunktion ein Beschleunigen und/oder Abbremsen der Welle herbeiführen oder unterstützen (Anspruch 8). Beispielsweise kann dies der Beschleunigung eines Kraftfahrzeugs zusammen mit dem Antriebsaggregat dienen. Zum Abbremsen eines Fahrzeugs kann die elektrische Maschine als verschleißfreie, ggf. generatorische Bremse oder Zusatzbremse dienen. Im Zusammenhang mit einer Antriebs-Schlupf-Regelung kann die elektrische Maschine durch Bremsen schnell das Gesamt-Antriebsmoment und damit den Schlupf eines oder mehrerer Antriebsräder verringern. Bei elektromagnetischer Kupplungsfunktion kann der Antriebsrad-Schlupf statt durch Bremsen auch durch Vergrößern des Kupplungs-Schlupfes verringert werden. Es ist möglich, während der Ausführung dieser Zusatzfunktionen die Drehungleichförmigkeits-Verringerungsfunktion auszuschalten oder beide Funktionen gleichzeitig auszuführen, etwa - wie oben erläutert - durch Überlagern eines entsprechenden antreibenden bzw. bremsenden Moments.

Die bei Anwenden dieser Zusatzfunktionen gewonnene Bremsenergie kann - wie die von Drehungleichförmigkeiten herrührende - gespeichert werden (z.B. im elektrischen Speicher oder im Schwungradspeicher) und als Antriebsenergie wiederverwendet oder in ein Netz oder z.B. die Fahrzeugbatterie eingespeist werden. Um bei der Fahrzeugbremsung mit Hilfe der elektrischen Maschine einen möglichst hohen Wirkungsgrad der Bremsenergie-Rückgewinnung zu erzielen, trennt man beim Bremsen vorteilhaft die elektrische Maschine vom Verbrennungsmotor mit Hilfe einer dazwischengeschalteten, z.B. mechanischen Kupplung.

Zur Versorgung von Hochleistungsverbrauchern, wie Hilfsmaschinen (Klimamaschinen, Servoantriebe, Pumpen) und Heizungen ist es vorteilhaft, daß die elektrische Maschine Strom auf relativ hohem Spannungsniveau, vorzugsweise im oberen Bereich der Niederspannung, wo gerade noch nicht für besonderen Berührungsschutz gesorgt werden muß (z.B. etwa 60 V Gleichspannung) liefert. Geht man darüber hinaus, wird vorzugsweise ein Bereich von 250 - 450 Volt gewählt. Vorteilhaft werden die Hochleistungsverbraucher elektrisch (statt wie bisher mechanisch bzw. durch Abwärme) auf diesen hohen Spannungsniveaus angetrieben (bzw. beheizt) (Anspruch 9). Derart hohe Spannungsniveaus können insbesondere bei einem Zwischenkreis-Wechselrichter im Zwischenkreis bereits vorliegen, und braucht so nicht besonders für diesen Zusatzzweck erzeugt werden. Für Niederleistungsverbraucher kann ein kerkömmliches Niederspannungsbordnetz (12 V oder 24 V) vorgesehen sein.

Die aktive Verringerung von Drehungleichförmigkeiten beruht - wie gesagt - darauf, daß die elektrische Maschine positiven und/oder negativen Drehungleichförmigkeiten entgegenwirkt, also z.B. bei positiven Drehungleichförmigkeiten bremsend und/oder bei negativen antreibend wirkt. Hierfür benötigt die Steuereinrichtung Information über den Zeitpunkt und ggf. den Betrag einer positiven bzw. negativen Drehungleichförmigkeit.

Eine Möglichkeit, diese Information zu erhalten, liegt in einer Messung der momentanen Drehungleichförmigkeit oder einer anderen, mit ihr gekoppelten Größe. Beruht der Betrieb der elektrischen Maschine auf dieser Information, so handelt es sich um eine rückgekoppelte Regelung, da das tatsächliche Vorliegen einer Drehungleichförmigkeit zu einer unmittelbaren Rückwirkung auf diese Drehungleichförmigkeit führt.

Als andere Möglichkeit verwendet man als Information für den Betrieb der elektrischen Maschine nicht die tatsächliche, sondern eine erwartete Drehungleichförmigkeit. Es handelt sich hierbei also um eine nicht-rückgekoppelte Steuerung. Beispielsweise kann man bei einem Verbrennungsmotor Betrag und Vorzeichen der momentanen Drehungleichförmigkeit als Funktion des (Kurbel)-Wellenwinkels und eines oder weiterer Betriebsparameter (z.B. Drehzahl und Drosselklappenstellung) einmal an einem Prototyp bestimmen bzw. per Rechner simulieren und mit dieser Information, gespeichert in Form eines Kennfeldes, jeden Serien-Verbrennungsmotor ausrüsten. Im Betrieb mißt das System dann den momentan vorliegenden Kurbelwellenwinkel und die weiteren Betriebsparameter (z.B. Drehzahl und Drosselklappenstellung), liest die dazugehörigen gespeicherten Kennfeldwerte für Betrag und Amplitude der erwarteten Drehungleichförmigkeit, und steuert über die Steuereinrichtung die elektrische Maschine entsprechend, um der Drehungleichförmigkeit entgegenzuwirken.

Möglich ist außerdem eine adaptive Steuerung, d.h. eine nicht-rückgekoppelte Steuerung, bei der die Steuerinformation jedoch nicht feststehend ist, sondern durch Messung zeitlich vorausgehender Drehungleichförmigkeiten definiert oder zumindest modifiziert wird.

Möglich sind ferner Mischformen der genannten Arten, z.B. können die in einem Kennfeld gespeicherten Erwartungswerte bezüglich einer erwarteten Größe adaptiv sein (z.B. bezüglich der Amplitude), während sie bezüglich einer anderen erwarteten Größe (z.B. Wellenwinkel) feststehend sein könnten. Eine sehr vorteilhafte Kombination ist auch eine Regelung mit Vorsteuerung, bei der z.B. in jedem Regelintervall die Regelung zunächst entsprechend einem erwarteten Drehungleichförmigkeitswert aus einem Kennfeld voreingestellt wird (Vorsteuerung) und anschließend die i.a. kleineren Abweichungen des tatsächlichen Werts zum voreingestellten Wert nachgeregelt werden (Regelung). Diese Steuerart liefert bei relativ geringem Aufwand ein sehr schnelles und genaues Regelverhalten. Es kann auch vorteilhaft sein, bei niedrigen Drehzahlen (z.B. im Leerlauf) mit (rückgekoppelter) Regelung zu arbeiten, dagegen bei höheren Drehzahlen zu (nicht-rückgekoppelter) Steuerung überzugehen (Anspruch 10).

Bei Regelung, adaptiver Steuerung und entsprechenden Mischformen muß die Meßgröße nicht unmittelbar die Drehungleichförmigkeit (ggf. abgeleitet aus einer Messung der Winkellage oder -geschwindigkeit als Funktion der Zeit) sein. Es kann sich vielmehr auch um eine (oder mehrere) andere Größe(n) handeln, die einen Schluß auf zumindest einen Teil der auftretenden Drehungleichförmigkeiten erlaubt (erlauben). Bei einem Verbrennungsmotor kann diese Größe vorteilhaft der Gasdruck in einem oder mehreren Motorzylindern sein. Der Gasdruck ist nämlich eine wesentliche, veränderliche Quelle der Drehungleichförmigkeiten. Außerdem zu berücksichtigen ist eine andere wesentliche, praktisch unveränderliche Quelle - die Massenkräfte. Ihr Beitrag kann in einem Kennfeld fest gespeichert sein. Alternativ (oder ergänzend) kann das momentane Drehmoment des Verbrennungsmotors, z.B. mit Hilfe einer Drehmomentnabe gemessen werden. Die Verwendung des Gasdruckes und/oder des momentanen Drehmoments als Meßgröße erlaubt somit eine relativ einfache und schnelle Regelung, adaptive Steuerung oder entsprechende Mischform. Der Gasdruck und/oder das momentane Drehmoment kann auch eine für die Verbrennungsmotor-Steuerung nützliche Größe darstellen.

Die elektrische Dreh- bzw. Wanderfeldmaschine des Antriebssystems ist vorzugsweise eine Asynchronmaschine, eine Synchronmaschine oder eine Reluktanzmaschine, insbesondere für Drei-Phasen-Strom. Eine Asynchronmaschine hat i.a. einen relativ einfach aufgebauten Läufer (i. a. einen Läufer mit Kurzschlußwicklungen oder Wicklungen, deren Enden an Schleifringe geführt sind). Hingegen haben Synchronmaschinen Läufer mit ausgeprägten Magnetpolen, die über Permanentmagnete oder Strom erregt werden. Reluktanzmaschinen gehören im weiteren Sinn zu den Synchronmaschinen. Insbesondere bei der Asynchronmaschine erfolgt die Steuerung der elektrischen Maschine vorzugsweise auf der Grundlage einer feldorientierten Regelung (sog. Vektorregelung). Hierbei wird, ausgehend von direkt meßbaren momentanen Größen, wie angelegte Spannung, Ständerstrom und ggf. Drehzahl, anhand eines rechnerischen dynamischen Maschinenmodells der Ständerstrom in eine drehmomentbildende Komponente, die mit dem Läuferfluß das Drehmoment erzeugt, und eine senkrecht dazu verlaufende, den Maschinenfluß erzeugende Komponente rechnerisch zerlegt und so das Drehmoment ermittelt.

Bei dem (Teil-)System zur aktiven Verringerung von Drehungleichförmigkeiten handelt es sich i. a. um ein Hilfssystem, das z.B. im Triebstrang eines Kraftfahrzeugs mit dem Antriebsaggregat angeordnet ist. Wegen seines Hilfs-Charakters sollte es relativ zum Antriebsaggregat wenig Raum beanspruchen, sollte also möglichst kompakt aufgebaut sein. Die im folgenden genannten vorteilhaften Maßnahmen dienen - neben anderen vorteilhaften Zwecken - einem solch kompakten Aufbau.

Eine Maßnahme zur Erzielung hoher Kompaktheit liegt darin, daß die elektrische Maschine eine feine Polteilung, insbesondere wenigstens einen Pol pro 45°-Ständerwinkel aufweist. Bei einer kreisförmig geschlossenen (360°-)Drehfeldmaschine entspricht dies einer Gesamtzahl von wenigstens acht Polen. Besonders vorteilhaft sind noch feinere Polteilungen, entsprechend z.B. 10, 12, 14, 16 oder mehr Polen bei der kreisförmig geschlossenen Maschine. Eine feine Polteilung erlaubt es nämlich, die Wickelköpfe des Ständers klein auszubilden, und zwar sowohl in Axial- wie auch in Umfangsrichtung der Maschine, so daß die Maschine in Axialrichtung insgesamt kürzer ausgebildet sein kann. Auch kann bei feinerer Polteilung der Ständerrücken für den magnetischen Rückfluß dünner (und damit auch leichter) ausgebildet sein, mit der Folge, daß bei gleichem Außendurchmesser der Maschine der Läufer einen größeren Durchmesser haben kann. Größerer Läuferdurchmesser führt wegen des in Umfangsrichtung längeren Luftspaltes und des größeren wirksamen Hebelarms zu einem größeren Drehmoment. Insgesamt führt somit eine feinere Polteilung zu einer kompakteren und leichteren Maschine. Daneben sind wegen der geringeren Wickeldrahtlänge - kleinere Wickelköpfe benötigen weniger nicht-aktiven Wicklungsdraht - die ohmschen Verluste geringer. Da ferner das Streufeld (das den Blindleistungsanteil wesentlich bestimmt) von der Wickelkopffläche abhängt, ist es bei feiner Polteilung relativ gering. Ein geringes Streufeld ist insbesondere bei der Drehungleichförmigkeits-Verringerung vorteilhaft, da hier - anders als bei einer üblichen elektrischen Maschine - dauernd zwischen Motor- und Generatorbetrieb hin- und hergewechselt wird und bei dem damit einhergehenden Umpolen laufend Blindleistung aufgebracht werden muß.

Bei schnell laufenden Drehfeld-Maschinen sind feine Polteilungen unüblich, da sie eine relativ hohe Polwechselfrequenz bedingen. Ein üblicher Wert für die Polwechselfrequenz beträgt beispielsweise 120 Hz. Die im Rahmen der Erfindung verwendete elektrische Maschine hat hingegen vorteilhaft eine hohe maximale Polwechselfrequenz, vorzugsweise zwischen 300 und 1600 Hz und mehr, besonders vorzugsweise zwischen 400 Hz und 1500 Hz.

Um den Einfluß von Wirbelströmen im Ständer - die mit steigender Polwechselfrequenz zunehmen - zu verringern, weist der Ständer vorteilhaft dünne Ständerbleche, vorzugsweise mit einer Dicke von 0,35 mm oder weniger, besonders vorzugsweise 0,25 mm oder weniger auf. Als weitere Maßnahme zur Verringerung der Verluste sind die Ständerbleche vorzugsweise aus einem Material mit niedrigen Ummagnetisierungsverlusten, insbesondere kleiner als 1 Watt/kg bei 50 Hz und 1 Tesla, gefertigt.

Als weitere Maßnahme, die zu einer kompakten Ausbildung beiträgt, weist die elektrische Maschine vorteilhaft eine innere Fluidkühlung auf. Bei dem Fluid kann es sich vorteilhaft um Öl handeln. Eine sehr effektive Kühltechnik besteht darin, die Maschine im Inneren ganz unter Öl zu setzen. Ein Nachteil hiervor ist jedoch, daß oberhalb ca. 500 U/min Turbulenzverluste auftreten, die oberhalb ca. 2000 U/min merkliche Ausmaße annehmen können. Um dem zu begegnen, erfolgt die Zufuhr des Kühlfluids vorteilhaft verlustleistungs- und/oder drehzahlabhängig, wobei es sich bei der Fluidkühlung vorzugsweise um eine Sprühfluidkühlung handelt. In der Maschine befindet sich dann immer nur im wesentlichen soviel Kühlfluid, wie momentan zur Abfuhr der Verlustleistung benötigt wird. Die Sprühfluidkühlung stellt eine besonders gute Verteilung des Fluids sicher.

Quantitativ läßt sich die Kompaktheit durch die Größe "Drehmomentdichte" ausdrücken. Vorzugsweise weist die elektrische Maschine eine hohe Drehmomentdichte - bezogen auf das maximale Drehmoment - auf, die besonders vorzugsweise größer als 0,01 Nm/cm³ ist (Anspruch 11).

An einer Welle mit Drehungleichförmigkeiten können oft auch Radialschwingungen auftreten, insbesondere bei Kurbelwellen. Um robust gegenüber Radialschwingungen zu sein, ist das System vorzugsweise so ausgebildet, daß die elektrische Maschine stark im Bereich magnetischer Sättigung arbeitet. Ein Maß für die magnetische Sättigung ist der Strombelag (bei maximalem Drehmoment) im Ständer pro cm Luftspaltlänge in Umfangsrichtung. Vorzugsweise beträgt dieses Maß wenigstens 400 - 1000 A/cm, besonders vorzugsweise wenigstens 500 A/cm. Das Arbeiten stark im Sättigungsbereich erlaubt es, die Maschine mit einem relativ weiten Luftspalt auszubilden. Änderungen des Luftspaltes - wie sie bei Radialschwingungen auftreten - wirken sich wegen des Betriebs im Sättigungsbereich kaum aus.

Eine derart kompakt aufgebaute elektrische Maschine hat im allgemeinen eine relativ geringe Induktivität. Um hier dennoch beispielsweise mit Hilfe einer getakteten Spannung einen möglichst genau sinusförmigen Strom zum Erzeugen der elektrischen Dreh- bzw. Wanderfelder zu erzielen, arbeitet der Wechselrichter vorteilhaft zumindest zeitweise mit einer hohen Taktfrequenz, insbesondere 10 kHz bis 100 kHz und höher. Diese Maßnahme ist auch vorteilhaft zur Erzielung einer hohen zeitlichen Auflösung des Systems: Beispielsweise kann man mit einer Taktfrequenz von 20 kHz eine zeitliche Auflösung im Drehmomentverhalten der elektrischen Maschine von 2 kHz erzielen, mit der man eine Drehungleichförmigkeit bei 200 Hz wirksam verringern kann (200 Hz entsprechen zum Beispiel der vierten Ordnung bei 3000 U/min). Eine hohe Taktfrequenz trägt auch zu einer kompakten Bauweise des Wechselrichters selbst bei, denn sie erlaubt kleinere Zwischenkreiskondensatoren, die mit kurzen Leitungswegen unmittelbar neben den elektronischen Schaltern angeordnet werden können. Ferner können EMV-Filter (EMV: Elektromagnetische Verträglichkeit) des Wechselrichters kleiner ausgeführt sein.

Als weitere vorteilhafte Maßnahme zur Erzielung einer kompakten Bauweise des Wechselrichters sind elektronische Schalter des Wechselrichters fluidgekühlt, vorzugsweise siedebadgekühlt (Anspruch 12). Als Siedebad-Kühlmittel kann beispielsweise ein Fluorkohlenwasserstoff verwendet werden. Bei der Siedebadkühlung verdampft das Kühlmittel an Wärmepunkten und entzieht ihnen dadurch seine relativ hohe Verdampfungswärme. Der Dampf steigt auf und kann z.B. in einem externen Kühler kondensieren und dabei seine Verdampfungswärme abgeben. Diese Kühltechnik erlaubt kompakteste Anordnung der elektronischen Schalter des Wechselrichters ohne jegliche Kühlkörper. Daneben hat sie den Vorteil, daß zur Erreichung auch hoher Kühlleistung relativ geringe Temperaturdifferenzen ausreichen, und zwar z.B. eine Differenz von 2-10° C, gegenüber ca. 40° c bei Luftkühlung. Eine weitere kühltechnisch vorteilhafte Maßnahme besteht darin, mehrere elektronische Schalter des Wechselrichters, insbesondere 2 bis 20 und mehr, parallel zu schalten. Die Parallelschaltung führt zu einer verteilten Anordnung der Wärmequellen und damit einer relativ geringen Verlustleistungsdichte.

Der Wechselrichter umfaßt vorteilhaft als Schalter Halbleiterschalter, vorzugsweise schnelle Halbleiterschalter, wie Feldeffekttransistoren - besonders vorzugsweise Metalloxidhalbleiter(MOS)-Feldeffekttransistoren, bipolare Transistoren und/oder bipolare Transistoren mit isoliertem Gateanschluß (IGBTs). Unter "schnellen" Halbleiterschaltern werden insbesondere solche verstanden, die maximale Taktfrequenzen von 10 bis 100 kHz oder mehr erlauben.

Der Wechselrichter erzeugt die für die magnetischen Felder der elektrischen Maschine benötigten Spannungen und/oder Ströme vorzugsweise durch Pulse, insbesondere auf der Grundlage von Pulsweiten- oder Pulsamplitudenmodulation. Bei konstanter Zwischenkreisspannung lassen sich durch sinusbewertete Pulsweitenmodulation bei hohen Taktfrequenzen aufgrund der Maschineninduktivität nahezu sinusförmige Ströme beliebig einstellbarer Frequenz, Amplitude und/oder Phase erzeugen. Bei der Pulsamplitudenmodulation geht man beispielsweise aus von einem Wechselrichter mit variabler Zwischenkreisspannung und erzeugt so Pulse verschiedener Amplituden.

Um bei dem System zu jedem Zeitpunkt die momentane Winkellage der Welle zu kennen, ist die elektrische Maschine oder die Welle vorteilhaft mit einem Läuferlage- bzw. Wellenlage-Geber ausgerüstet. Aus der Information über die momentane Winkellage kann auf die momentane Winkelgeschwindigkeit und -beschleunigung und damit auf momentane Drehungleichförmigkeiten geschlossen werden. Auf dieser Information kann - wie oben ausgeführt wurde - bei einem geregelten System die Drehungleichförmigkeits-Verringerung basieren. Bei einem gesteuerten System wird die Information über die momentane Winkellage und ggf. die momentane mittlere Drehzahl gebraucht, um den richtigen Erwartungswert aus dem Kennfeld auszulesen. Zur Gewinnung einer möglichst genauen Winkellage-Information kann insbesondere ein Drehtransformator (ein sog. Resolver) dienen, also ein Transformator mit winkelabhängigem Übertragungsverhältnis. Auch hochauflösende Kodierer sind für diesen Zweck einsetzbar, z.B. eine Kombination aus einem hochauflösenden Inkrementalgeber und einem einfachen Absolutgeber. Die hochgenaue Winkelinformation wid vorteilhaft auch von der Motorsteuerung genutzt.

Bei vorteilhaften Ausgestaltungen der Erfindung kann die elektrische Maschine auch als elektromagnetische Kupplung im Antriebsstrang fungieren. Bei einer "elekromagnetischen Kupplung" erfolgt die Momentübertragung über die Kupplung hinweg durch elektrische, magnetische oder elektromagnetische Kräfte. Es ist möglich, daß diese Art der Kraftübertragung nur zeitweise vorliegt. Zum Beispiel kann nach Erreichen gleicher Drehzahl der zu kuppelnden Wellen die Kraftübertragung von einer mechanischen Kupplung übernommen werden.

Grundsätzlich kann die Funktion der elektromagnetischen Kupplung durch zwei elektrische Maschinen erzielt werden, von denen die erste als Generator, die zweite als vom Generatorstrom gespeiste Motor dient. Bei einer vorteilhaften Ausgestaltung wird die Kupplung durch eine einzelne elektrische Maschine gebildet, welche wenigstens zwei drehbare elektromagnetische Wirkeinheiten aufweist, von denen eine mit einem antriebsseitigen Drehmomentübertrager und die andere mit einem abtriebsseitigen Drehmomentübertrager gekoppelt oder koppelbar ist. Bei den Drehmomentübertragern handelt es sich i.a. um Antriebs- und Abtriebswelle, etwa die Triebwelle des Antriebsaggregats und die von der elektrischen Maschine zum Getriebe führende Welle. Die elektromagnetischen Wirkeinheiten entsprechen Läufer und Ständer bei der normalen elektrischen Maschine, jedoch mit dem Unterschied, daß hier neben dem Läufer auch der Ständer drehbeweglich ist. Die Maschine entspricht also einer normalen Maschine mit Läufer und Ständer, welche zusätzlich zur Läuferrotation als Ganzes drehbar ist. Die als Ganzes drehbare Maschine kann zwischen Läufer und "Ständer" positive und negative Relativdrehmomente erzeugen. Auf diese Weise kann der Kupplungsschlupf beeinflußt werden. Dadurch können verschiedene Kupplungswirkungen erzielt werden: Die elektrische Maschine kann beispielsweise derart geregelt werden, daß sich ein geeignetes Relativdrehmoment zwischen Läufer und Ständer einstellt und der Kupplungsschlupf verschwindet (Kupplungsschlupf 0). Dann überträgt die elektrische Maschine Drehzahl und Drehmoment ungeändert - entsprechend einer geschlossenen mechanischen Kupplung. Die elektrische Maschine kann aber auch derart geregelt werden, daß das Relativdrehmoment zwischen Läufer und Ständer verschwindet und sich ein Kupplungsschlupf entsprechend der Relativdrehzahl der Drehmomentübertrager einstellt. Auf diese Weise erzielt man deren vollständige Trennung ohne Drehmomentübertragung - entsprechend etwa einer vollständig geöffneten mechanischen Kupplung. Kupplungsschlupfwerte, die zwischen diesen beiden Werten liegen, sind durch entsprechende Ansteuerung der elektrischen Maschine ebenfalls erreichbar. Die als Kupplung wirkende elektrische Maschine kann zur Schwingungsdämpfung verwendet werden, und zwar: 1) bei festgelegtem abtriebsseitigem Drehmomentübertrager zur Dämpfung auf der Antriebsseite, und 2) sonst durch Einstellung eines mit der Drehungleichförmigkeit variierenden Kupplungsschlupfes zur Schwingungsisolierung der Abtriebs- von der Antriebsseite.

Die elektrische Maschine kann auch zur Antriebsschlupfregelung (ASR) dienen. Die Regelung des Antriebsschlupfes wird - im Stand der Technik - derart durchgeführt, daß bei Erreichen eines Grenzwertes des Antriebsschlupfes oder einer zeitlichen Änderung (zeitliche Ableitung) des Antriebsschlupfes das Antriebsmoment verringert wird. Die Verringerung des Antriebsmoments wird entweder durch Verstellung des Verbrennungsmotors, also durch Drosselklappenverstellung oder durch Zündzeitpunktverstellung, oder durch Betätigen einer oder mehrerer Radbremse(n) realisiert. Auch eine Kombination beider Maßnahmen ist bekannt. Insbesondere können zusätzlich zur Verbrennungsmotorverstellung, die bei Überschreiten eines ersten Grenzwertes des Antriebsschlupfes erfolgt, die Radbremsen betätigt werden, wenn ein zweiter, höherer Grenzwert des Antriebsschlupfes erreicht wird. Derartige Regelungen sind einerseits relativ träge, andererseits relativ schlecht steuerbar, d.h. ein bestimmter zeitlicher Verlauf der Antriebsmomentverringerung ist praktisch nicht erzielbar.

Gemäß einer vorteilhaften Ausgestaltung dient die elektrische Maschine einer Antriebsschlupfregelung und ist derart ausgelegt, daß mit ihr eine Antriebsschlupfverringerung durch Verkleinerung des Antriebsmoments (des Antriebsaggregats) herbeiführbar ist, insbesondere durch Bremswirkung und/oder - bei als Kupplung wirkender elektrischer Maschine - durch Kupplungsschlupf-Wirkung.

Die Antriebsschlupfregelung mit elektrischer Maschine kann die aus dem Stand der Technik bekannte Antriebsschlupfregelung mit Motorverstellung oder Radbremsung ersetzen oder in Kombination mit der aus dem Stand der Technik bekannten Antriebsschlupfregelung mit Motorverstellung und/oder Radbremsung verwendet werden. Vorteilhaft übernimmt das für die Steuerung der elektrischen Maschine zuständige Steuergerät im wesentlichen die gesamte ASR-Steuerung. Umgekehrt kann vorteilhaft ein ASR-Steuergerät vorteilhaft auch für die Steuerung der elektrischen Maschine zuständig sein. Falls ein gesondertes ASR-Steuergerät vorgesehen ist, kommuniziert dieses vorteilhaft mit der Maschinensteuerung und ggf. der Motor- und/oder Bremsaussteuerung.

Im übrigen werden in der gesamten vorliegenden Beschreibung Zahlenangaben "x" im Sinn von "wenigstens x", und nur vorzugsweise im Sinn von "genau x" verstanden.

Die Erfindung wird nun anhand von Ausführungsbeispielen und der angefügten schematischen Zeichnung näher erläutert. In der Zeichnung zeigen:
- Fig. 1: eine schematische beispielhafte Darstellung der Funktionsweise der aktiven Verringerung von Drehungleichförmigkeiten;
- Fig. 2: eine unmaßstäblich-schematische Darstellung einer Ausführungsform des Antriebssystems;
- Fig. 3: eine schematische Schnittdarstellung einer elektrischen Maschine mit Schnittebene senkrecht zur Axialrichtung zur Veranschaulichung verschiedener bei dem System verwendbaren Maschinentypen;
- Fig. 4: einen schematischen Schaltplan eines bei dem System verwendeten Wechselrichters;
- Fig. 5: eine Fig. 2 entsprechende Darstellung einer anderen Ausführungsform des Antriebssystems;
- Fig. 6: eine schematische Darstellung einer elektrischen Maschine mit drehbaren elektromagnetischen Wirkeinheiten;

In den Figuren tragen im wesentlichen funktionsgleiche Teile gleiche Bezugszeichen.

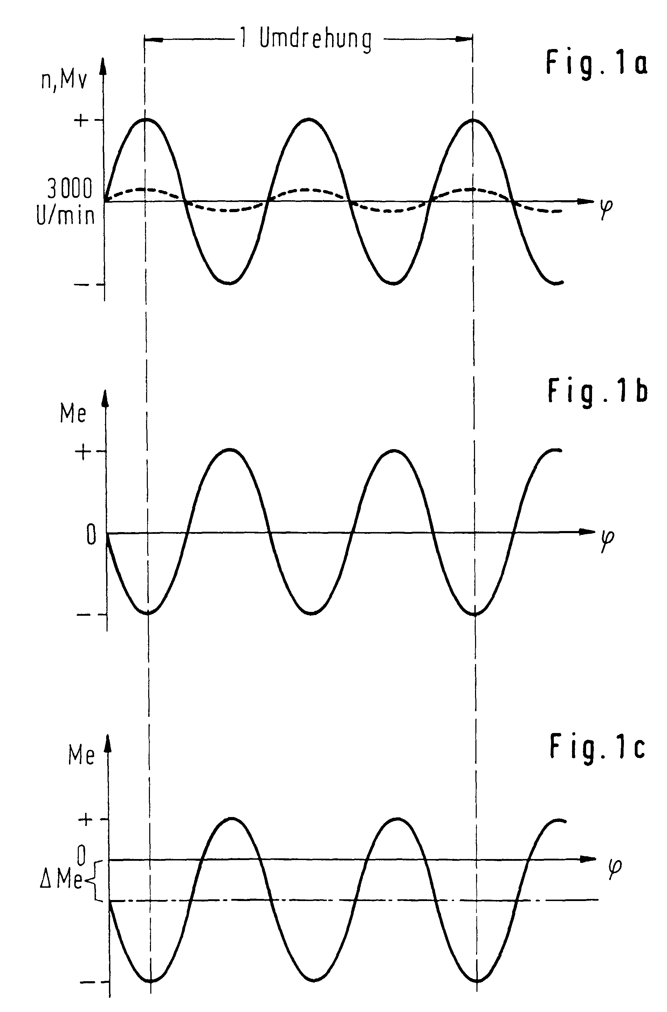

Fig. 1a veranschaulicht (mit durchgezogener Linie) die Drehzahl n einer Welle als Funktion des Kurbelwellenwinkels ϕ. Die Welle führt um eine mittlere Drehzahl (hier 3000 Umdrehungen pro Minute) periodisch Drehzahlschwankungen zu kleineren und größeren Drehzahlen hin aus, welche in diesem idealisierten Beispiel insgesamt einen im wesentlichen sinusförmigen Verlauf haben. Bei der Welle handelt es sich beispielsweise um die Kurbelwelle eines Vierzylinder-Viertakt-Verbrennungsmotors eines Kraftfahrzeugs, die in der zweiten Ordnung (d.h. bei einer Frequenz von 100 Hz) eine relativ große, von den Gas- und Massenkräften herrührende Drehungleichförmigkeit aufweist. Zur Veranschaulichung ist auch das für eine Umdrehung der Welle benötigte Winkel intervall eingezeichnet. Im allgemeinen treten bei einer Welle außerdem (hier nicht dargestellte) Drehungleichförmigkeiten höherer Ordnungen und solche stochastischer Natur auf. Ihr Verlauf ist also i.a. nicht sinusförmig.

Im wesentlichen proportional zu den Drehungleichförmigkeiten sind Schwankungen des Drehmoments Mv des Verbrennungsmotors um ein mittleres Drehmoment. Die durchgezogene Linie in Fig. la veranschaulicht damit auch den Verlauf des Motor-Drehmoments Mv als Funktion des Kurbelwellenwinkels ϕ.

Fig. 1b veranschaulicht das Gesamt-Drehmoment Me als Funktion des Wellenwinkels ϕ, das von einer mit der Welle gekoppelten elektrischen Maschine aufgebracht wird. Der Verlauf des Maschinendrehmoments Me entspricht weitgehend dem der Drehungleichförmigkeit und des Motor-Drehmoments Mv, ist jedoch entgegengesetzt gerichtet. D.h., bei einer Drehungleichförmigkeit zu höheren Drehzahlen hin (sog. positive Drehungleichförmigkeit) erzeugt die elektrische Maschine ein die Welle bremsendes Drehmoment (sog. negatives Drehmoment), wohingegen sie bei einer Drehungleichförmigkeit zu niederen Drehzahlen hin (sog. negative Drehungleichförmigkeit) ein antreibendes Drehmoment (sog. positives Drehmoment) erzeugt. Der Betrag des Drehmoments Me ist so gewählt, daß die Drehungleichförmigkeit - und die zu ihr proportionale Schwankung des Drehmoments Mv - durch dessen Wirkung wesentlich verringert wird oder sogar praktisch verschwindet, wie in Fig. 1a durch die gestrichelte Linie veranschaulicht ist.

Bei der in Fig. 1b gezeigten Betriebsweise sind die negativen und positiven Drehmomentextrema betragsmäßig gleich groß. Die bei einer Bremsphase gewonnene Energie ist also im wesentlichen gleich groß wie die bei der folgenden Antriebsphase aufzuwendende Energie. Der Energiefluß nach außen ist somit Null, es wird nur im Inneren des System zeitweise Bremsenergie zwischengespeichert. Das System arbeitet also in dieser Betriebsweise als reiner Drehungleichförmigkeits-Verringerer mit schnell variierendem Drehmoment, ohne Erzeugung eines Zusatz-Drehmoments.

Ein Beispiel für eine demgegenüber modifizierte Betriebsweise des Systems mit Zusatz-Drehmoment ist in Fig. 1c gezeigt: Der zeitliche Verlauf des Gesamt-Drehmoments Me entspricht dem von Fig. 1b, es ist jedoch global um einen bestimmten Betrag ΔMe (den sog. Hub) in negative Richtung verschoben. Der Hub ΔMe wird im allgemeinen langsam variieren, in dem hier dargestellten kurzen Zeitrahmen von ungefähr einer Umdrehungsperiode ist er jedoch in guter Näherung konstant. Der Hub ΔMe ist hier kleiner als die Amplitude der schnelle Variation des Drehmoments, so daß das Gesamt-Drehmoment Me alternierend positive und negative Werte annimmt. Gemittelt über die schnelle Drehmomentvariation erhält man ein konstantes Drehmoment -ΔMe. Dem Verbrennungsmotor wird also im Mittel mechanische Energie entzogen, die weitgehend in elektrische Energie umgewandelt und dem System entnommen wird. Die elektrische Maschine hat also in dieser Betriebsart neben der Funktion als Drehungleichförmigkeits-Verringerer die Funktion eines elektrischen Generators, der als Bremse wirken kann und Strom z.B. zum Ausgleichen der Betriebsverluste des Systems, zum Laden der Fahrzeugbatterie und/oder zum Betreiben elektrischer Verbraucher liefern kann.

Falls der Hub ΔMe größer als die Amplitude zur Verringerung der Drehungleichförmigkeit ist, wirkt die elektrische Maschine nur noch bremsend und nicht mehr antreibend, wobei die Bremswirkung in ihrem Betrag entsprechend Fig. 1b und 1c gegenphasig zur Drehungleichförmigkeit variiert.

Allein durch eine entsprechende Einstellung der (Software-)Steuerung der elektrischen Maschine - ohne jegliche konstruktive (Hardware-)Änderungen - sind kleine und sehr große Generatorleistungen einstellbar. Begrenzend wirkt nur die Größe der elektrischen Maschine. Damit kann ein und der selbe Maschinentyp beispielsweise für kleine und große Kraftfahrzeugtypen ohne konstruktive Anpassung verwendet werden.

Der globale Drehmomentverlauf kann auch in positiver Richtung verschoben sein (positiver Hub). Die elektrische Maschine arbeitet dann neben ihrer Funktion als Drehungleichförmigkeits-Verringerer als (antreibender) Motor, z.B. um den Verbrennungsmotor bei einer Fahrzeugbeschleunigung zu unterstützen.

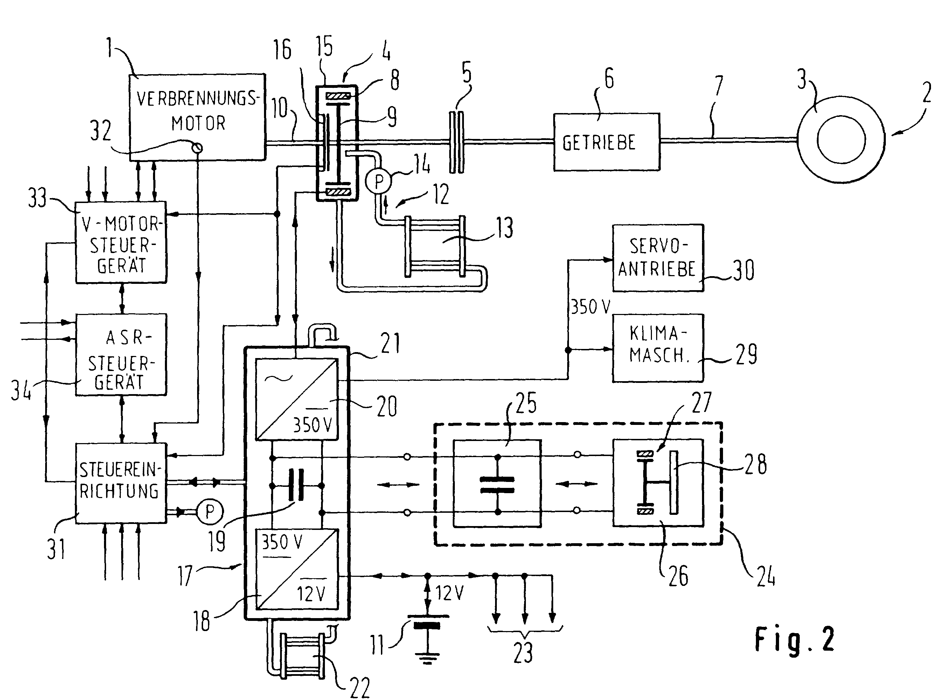

Das in Fig. 2 dargestellte Antriebssystems eines Kraftfahrzeugs, z.B. eines Personenkraftwagens, weist als Antriebsaggregat einen Verbrennungsmotor 1 auf, bei dem es sich beispielsweise um einen Vierzylinder-Viertakt-Otto- oder Dieselmotor handelt. Das vom Verbrennungsmotor 1 erzeugte Drehmoment kann über einen Antriebsstrang 2 auf Antriebsräder 3 übertragen werden. In Abtriebsrichtung ist im Antriebsstrang 2 nach dem Verbrennungsmotor 1 zunächst eine elektrische Maschine 4 angeordnet. Auf diese folgen eine Fahrkupplung 5, ein Getriebe 6 und ein Achsantrieb 7, welcher das Drehmoment auf die Antriebsräder 3 überträgt. Bei der Kupplung 5 und dem Getriebe 6 kann es sich um eine Reibungskupplung und ein Schaltgetriebe handeln; alternativ sind z.B. eine automatische Kupplung oder Wandlerkupplung, jeweils mit Schaltgetriebe oder automatischem Getriebe möglich. Bei anderen (nicht gezeigten) Ausführungsformen ist im Antriebsstrang 2 zwischen Verbrennungsmotor 1 und elektrischer Maschine 4 eine weitere (durch Steuerung betätigte) Kupplung angeordnet, um beim Bremsen mit der elektrischen Maschine 4 einen Mitlauf des Verbrennungsmotors 1 zu vermeiden.

Die elektrische Maschine 4 - hier eine Drehstrom-Wanderfeld-Maschine in Asynchron- oder Synchron-Bauart - umfaßt einen Ständer 8 und einen Läufer 9. Ersterer stützt sich drehfest gegen den Verbrennungsmotor 1, ein (nicht gezeigtes) Fahrzeugchassis oder ein (nicht gezeigtes) Kupplungsgehäuse ab, wohingegen letzterer direkt auf einer Triebwelle (Kurbelwelle) 10 des Verbrennungsmotors 1 oder einer Verlängerung hiervon sitzt und mit dieser drehfest gekoppelt ist. Die Triebwelle 10 und der Läufer 9 rotieren also gemeinsam, ohne Zwischenschaltung eines Getriebes.

Die elektrische Maschine 4 erfüllt mehrere Funktionen: Sie fungiert einerseits als Drehungleichförmigkeits-Verringerer, wie im Zusammenhang mit Fig. 1 bereits erläutert wurde. Andererseits fungiert sie als Generator zur Ladung einer Fahrzeugbatterie 11 und zur Versorgung elektrischer Verbraucher und ersetzt damit eine herkömmlicherweise im Kraftfahrzeug vorhandene Lichtmaschine. Die Generatorfunktion kann ferner zum Abbremsen des Fahrzeugs oder des Verbrennungsmotors 1 dienen. Außerdem kann die elektrische Maschine 4 als Zusatzmotor ("Booster") fungieren, z.B. um den Verbrennungsmotor beim Beschleunigen des Fahrzeugs zu unterstützen. Auch dient sie als Starter für den Verbrennungsmotor und kann somit auch einen herkömmlicherweise beim Kraftfahrzeug gesondert vorgesehenen Starter ("Anlasser") ersetzen. Schließlich fungiert sie aufgrund des Massenträgheitsmoments des Läufers 9 als Schwungrad und kann so das bei herkömmlichen Kraftfahrzeugen i.a. vorhandene, auf der Kurbelwelle sitzende Schwungrad ersetzen.

Die elektrische Maschine 4 ist durch Fluidkühlung, hier eine Sprühflüssigkeitskühlung 12 innengekühlt. Nach Durchlaufen eines Kühlers 13 und einer Pumpe 14 wird die Kühlflüssigkeit - hier ein geeignetes Öl - an den Läufer 9, und zwar in der Nähe von dessen Rotationsachse, gesprüht. Sie wandert aufgrund der Läuferrotation fliehkraftbedingt nach außen und kühlt dabei Läufer 9 und Ständer 8, und verläßt dann ein Gehäuse 15 der elektrischen Maschine 4, um in einem geschlossenen Kreislauf wieder in den Kühler 13 einzutreten. Der Kühlmittelfluß erfolgt verlußtleistungs- und drehzahlabhängig durch entsprechende Steuerung der Pumpe 14, derart, daß sich jeweils im wesentlichen nur eine gerade benötigte Mindestmenge des Kühlfluids im Inneren des Gehäuses 15 befindet. Ein (nicht gezeigtes) Ausgleichsgefäß erlaubt diese Variation der Kühlflüssigkeitsmenge im Gehäuse 15. Bei anderen (nicht gezeigten) Ausführungsformen ist die elektrische Maschine (oder nur der Läufer) in ein Kupplungs- und/oder Getriebegehäuse integriert und wird durch ein darin befindliches Schmier- und/oder Kühlfluid (z.B. Kupplungs- oder Getriebeöl) mit gekühlt.

Die elektrische Maschine 4 ist außerdem mit einem Drehtransformator 16 (sog. Resolver) ausgerüstet, der vorzugweise mehr als 8 Pole, hier z.B. 12 Pole auweist. Er besteht aus zwei benachbart angeordneten Leiterplatten, von denen eine feststeht und die andere sich mit der Triebwelle 10 dreht. Die Leiterplatten tragen auf ihren zugewandten Oberflächen durch Leiterbahnen gebildete Windungen, derart daß sich ein drehwinkelabhängiges Transformator-Übersetzungsverhältnis ergibt. Der Drehtransformator 16 arbeitet nach dem Transponder-Prinzip: Die feststehenden Windungen (festehende Platine) werden aktiv mit Strom/Spannung beaufschlagt und strahlen elektromagnetische Energie zu den drehbaren Windungen (drehbare Platine) hin ab. Letztere strahlen einen Teil dieser Energie wieder zurück, wobei dieser Teil aufgrund des drehwinkelabhängigen Übertragungsverhältnisses vom Drehwinkel abhängt. Der rückgestrahlte Teil erzeugt in den feststehenden Windungen ein drehwinkelabhängiges Signal. Eine Auswertung dieses Signals liefert den momentanen Drehwinkel der Triebwelle 10 mit einer Genauigkeit von wenigstens 0,5 Grad. Bei einfacheren Ausführungsformen wird ein Inkrementalgeber verwendet.

Ein Wechselrichter 17 liefert dem Ständer 8 der elektrischen Maschine 4 bei einer sehr hohen Taktfrequenz (z.B. 10-100 kHz) sinusbewertete pulsweitenmodulierte Spannungsimpulse, die unter der Wirkung der Maschineninduktivität im wesentlichen sinusförmige Dreiphasen-Ströme ergeben, deren Amplitude, Frequenz und Phase frei vorwählbar ist.

Der Wechselrichter 17 ist ein Spannungszwischenkreis-Wechselrichter und umfaßt drei Baugruppen: einen Gleichspannungsumsetzer 18 (Eingangsbaugruppe), welcher Gleichspannung von einem niedrigen Niveau (hier 12 V) auf ein höheres Zwischenkreisniveau (hier 60 V oder 350 V) und in umgekehrter Richtung umsetzt, einen elektrischen Zwischenkreisspeicher 19, hier ein Kondensator bzw. eine Anordnung parallel geschalteter Kondensatoren, und einen Maschinenwechselrichter 21 (Ausgangsbaugruppe), welcher aus der Zwischenkreis-Gleichspannung die (getaktete) Dreiphasen-Wechselspannung variabler Amplitude, Frequenz und Phase erzeugen kann oder - bei generatorischem Betrieb der elektrischen Maschine 4 - derartige beliebige Wechselspannungen in die Zwischenkreis-Gleichspannung umsetzen kann. Bei anderen (nicht gezeigten) Ausführungsformen liegt das Zwischenkreisniveau am oberen Rand des ohne besonderen Berührungsschutz zulässigen Niederspannungsbereichs, hier 60 V.

Die drei Baugruppen 18, 19, 20 des Wechselrichters 17 sind in einem metallischen Gehäuse 21 hermetisch eingeschlossen, welches mit einem geeigneten Siedekühlmittel gefüllt ist.

Bei diesem handelt es sich z.B. um einen Fluorkohlenwasserstoff, der bei einem geeigneten Druck (etwa zwischen 50 mbar und 3 bar) einen geeigneten Siedepunkt, z.B. bei 60° C, hat. Verdampftes Siedekühlmittel kann in einem Kondensationskühler 22 kondensieren und in flüssiger Form in einem geschlossenen Kreislauf in das Gehäuse 21 zurückkehren. Das Gehäuse 21 mit dem Kühlkreislauf ist hermetisch dicht.

Der Gleichspannungsumsetzer 18 ist niederspannungsseitig mit der Fahrzeugbatterie 11 und verschiedenen Niederspannungverbrauchern 23, wie beispielsweise Beleuchtung und elektronische Geräte, verbunden. Der Wechselrichter 17 kann einerseits Strom auf niedrigem Spannungsniveau zum Laden der Fahrzeugbatterie 11 und Versorgen der Niederspannungsverbraucher 23 liefern, andererseits kann er der Fahrzeugbatterie 11 Strom auf niedrigem Spannungsniveau zum Starten des Verbrennungsmotors 1 entnehmen.

Der Zwischenkreisspeicher 19 ist verbunden mit einem externen Zusatzspeicher 24, bei dem es sich um einen elektrischen Speicher, hier eine Zusatzkapazität 25, und/oder einen Schwungradspeicher 26 handeln kann. Der Zusatzspeicher 24 hat in erster Linie die Aufgabe, die beim Drehungleichförmigkeits-Verrringern in einer Bremsphase gewonnene Energie zwischenzuspeichern und für die anschließende Antreibphase wieder abzugeben. Daneben kann er auch der Speicherung derjenigen Energie dienen, die bei anderen, durch die elektrische Maschine 4 vermittelten Bremsvorgängen anfällt. Schließlich kann er die Fahrzeugbatterie 11 beim Startvorgang des Verbrennungsmotors 1 entlasten, indem dieser Energie nur langsam entnommen und im Zusatzspeicher 24 gespeichert wird. Hier steht sie dann für eine schnelle Entnahme beim Startvorgang zur Verfügung.

Hingegen hat der (innere) Zwischenkreisspeicher 19 im wesentlichen die Aufgabe, der Maschinen-Wechselrichtergruppe 20 Spannung mit der für das Takten notwendigen hohen Flankensteilheit - also schnell - zu liefern. Er braucht dazu keine sehr hohe Kapazität (er hat z.B. 2 µF), vorteihaft für die Schnelligkeit sind vielmehr geringe Zuleitungsinduktivitäten, was durch die Anordnung im Inneren des Wechselrichters 17 sichergestellt ist (und zwar vorzugsweise auf derselben Platine, auf der auch die elektronischen Schalter des Maschinen-Wechselrichters 20 angeordnet sind). Der Zusatzspeicher 24 kann hingegen relativ langsam arbeiten, so daß hier die Zuleitungskapazitäten aufgrund der externen Anordnung nicht stören. Die Zusatzkapazität 25 kann insbesondere 50 bis 10000 mal größer sein (sie ist hier z.B. 4,7 mF für die Speicherung der Drehungleichförmigkeits-Energie) als die des Zwischenkreisspeichers 19.

Noch größere Speicherkapazitäten sind mit dem Schwungradspeicher 26 erreichbar, der hier eine eigene wechselrichtergesteuerte elektrische Maschine 27 und eine damit gekoppelte Schwungmasse 28 umfaßt. Letztere kann durch ein gesondertes Schwungrad gebildet oder in den Läufer der elektrischen Maschine 27 integriert sein. Das Massenträgheitsmoment der Schwungmasse 28 beträgt vorzugsweise 0,05 bis 2 kgm². Es ist auch möglich, in dem Schwungradspeicher 26 ein Mehrfaches der zum Starten des Verbrennungsmotors 1 benötigten Energie zu speichern und ihm zum Starten schnell (d.h. in weniger als einer Sekunde) die jeweils nötige Startenergie zu entnehmen.

Bei anderen (nicht gezeigten) Ausführungsformen ist kein gesonderter Zusatzspeicher 24 vorgesehen. Hier ist der Zwischenkreisspeicher 19 so dimensioniert und ggf. außerhalb des Wechselrichters 17 angeordnet, daß er die Funktionen des Zusatzspeichers 24 mit übernehmen kann.

Der Zwischenkreis mit seinem hohen Spannungsniveau (hier 60 V oder 350 V) versorgt verschiedene Hochleistungsverbraucher, wie eine Klimamaschine 29 und Servoantriebe 30 mit elektrischer Energie. Während derartige Hochleistungsverbraucher herkömmlicherweise durch mechanische Kopplung vom Verbrennungsmotor 1 angetrieben werden, erlaubt das hier zur Verfügung stehende hohe Spannungsniveau einen wirkungsgradmäßig günstigeren, rein elektrischen Antrieb.

Eine Steuereinrichtung 31 gibt dem Wechselrichter 17 durch entsprechende Ansteuerung seiner Halbleiterschalter zu jedem Zeitpunkt vor, welche Amplitude, Frequenz und Phase die von ihm zu erzeugende Wechselspannung haben soll. Die Steuereinrichtung 31, die durch ein entsprechend programmiertes Mikrocomputer-System gebildet wird, bestimmt zunächst den Betrag und die Richtung des Drehmoments, welches die elektrische Maschine 4 zu einem bestimmten Zeitpunkt erzeugen soll. Sie kann dies z.B. mit Hilfe einer Kennfeldsteuerung tun, indem sie als Eingangsinformation vom Drehtransformator 16 die Winkelstellung der Triebwelle 10, die momentane mittlere Drehzahl und ggf. weitere Betriebsparameter, wie z.B. die Drosselklappenstellung, erhält und aus einem gespeicherten Kennfeld die momentan zu erwartende Drehungleichförmigkeit in Abhängigkeit von diesen Betriebsparametern ermittelt. Eine andere Möglichkeit besteht darin, die tatsächlich momentan vorliegende Drehungleichförmigkeit zu ermitteln, z.B. durch Berechnung der momentanen Drehgeschwindigkeit auf der Grundlage der vom Drehtransformator 16 gelieferten Information und/oder durch Auswertung der momentan im Verbrennungsmotor 1 vorliegenden Gasdrücke, welche mit Hilfe von Gasdrucksensoren 32 detektierbar sind, sowie durch Erfassung der momentanen Drehmoments des Verbrennungsmotors 1 mit Hilfe einer (nicht gezeigten) Drehmomentnabe im Antriebsstrang. Möglich ist auch eine Kombination von Regelung und Steuerung. Aus dem so ermittelten Wert für die momentane Drehungleichförmigkeit wird ein entsprechender (gegenphasiger) Wert für das schnell variierende Soll-Drehmoment der elektrischen Maschine 4 abgeleitet, dem ggf. ein positives oder negatives Zusatz-Drehmoment gewünschter Stärke additiv überlagert wird. Zum Starten des Verbrennungsmotors 1 kann das Soll-Drehmoment auf der Grundlage gespeicherter Werte bestimmt werden, die den zeitlichen Soll-Verlauf der Drehzahl oder des Drehmoments der elektrischen Maschine 4 während des Startvorgangs vorgeben, ggf. ergänzt durch eine Messung dieser Größen und eine rückgekoppelte Regelung, welche die Einhaltung der Vorgaben sicherstellt.

In einem zweiten Schritt bestimmt die Steuereinrichtung 31, welche Amplitude, Frequenz und Phase der Spannung bzw. des Stroms vom Wechselrichter 17 bereitgestellt werden muß, damit die elektrische Maschine 4 dieses Soll-Gesamtdrehmoment herbeiführt. Diese Bestimmung erfolgt bei der elektrischen Asynchronmaschine auf der Grundlage einer feldorientierten Regelung, welche auf einer Modellrechnung der elektrischen Maschine 4 beruht und als Eingangsinformation im wesentlichen die meßbaren elektrischen Ständergrößen (Amplitude, Frequenz und Phase von Strom und Spannung) und die momentane mittlere Läuferdrehzahl verwendet.

In Fig. 2 ist die Steuereinrichtung 31 als außerhalb des Wechselrichtergehäuses 21 angeordnet dargestellt. Um die Zuleitungsinduktivitäten gering zu halten und auch an der Siedebadkühlung zu partizipizieren, ist sie jedoch bei anderen (nicht gezeigten) Ausführungsformen im Inneren des Wechselrichtergehäuses 21 angeordnet.

Die Steuereinrichtung 31 teilt verschiedene, zur Erfüllung ihrer Steueraufgaben dienende Sensoren bzw. davon abgeleitete Sensorinformationen mit einem Motorsteuergerät 33 zur Steuerung des Verbrennungsmotors 1. Im einzelnen handelt es sich z.B. um den Drehtransformator 16 (Winkellagegeber), die Gasdrucksensoren 32, daneben (nicht gezeigte) Sensoren zur Erfassung der mittleren Drehzahl, des Lastzustandes des Verbrennungsmotors 1 (z.B. über die Drosselklappenstellung) und dessen Drehmoments (z.B. mit Hilfe einer Drehmomentnabe).

Außerdem kommuniziert die Steuereinrichtung 31 mit einer Vielzahl weiterer Steuergeräte: ein (nicht gezeigtes) Energieverbrauchs-Steuergerät gibt an, wieviel Energie zum Laden der Fahrzeugbatterie 11, zur Versorgung der Niederspannungsverbraucher 23 und der Hochleistungsverbraucher 29, 30 benötigt wird, so daß die Steuereinrichtung 31 eine entsprechende globale Drehmomentverstellung ΔMe (siehe Fig. 1c) veranlassen kann. Das Motorsteuergerät 33 gibt der Steuereinrichtung 31 vor, ob die elektrische Maschine 4 zusätzlich zu ihrer Schwingungsverringerungs-Funktion fahrzeugbeschleunigend oder -bremsend wirken soll, so daß diese eine entsprechende globale Drehmomentverschiebung ΔMe veranlassen kann und ggf. die Drehungleichförmigkeits-Verringerungsfunktion vorübergehend abschalten kann. Entsprechend gibt ein ASR-Steuergerät 34 der Steuereinrichtung 31 bei Vorliegen von Antriebsschlupf vor, daß die elektrische Maschine 4 vorübergehend als generatorische Bremse wirken soll, ggf. bevor das ASR-Steuergerät bei verbleibendem Antriebsschlupf als massivere Maßnahme ein Einbremsen der betroffenen Antriebsräder durch die Radbremse veranlaßt. Zusätzlich kann das ASR-Steuergerät seine Schlupf information an das Motorsteuergerät 33 übergeben, um außerdem eine Verringerung des Verbrennungsmotor-Drehmoments zu veranlassen. Das Motorsteuergerät 33 führt auch eine automatische Start-Stop-Steuerung des Verbrennungsmotors 1) durch und gibt der Steuereinrichtung 31 vor, ob die elektrische Maschine 4 den Verbrennungsmotor 1 starten soll.

Bei jeder Art von Bremsen gewonnene Energie wird im Zusatzspeicher 24 gespeichert, um zum späteren Antreiben der elektrischen Maschine 4 wiederverwendet oder der Fahrzeugbatterie 11 zugeleitet zu werden.

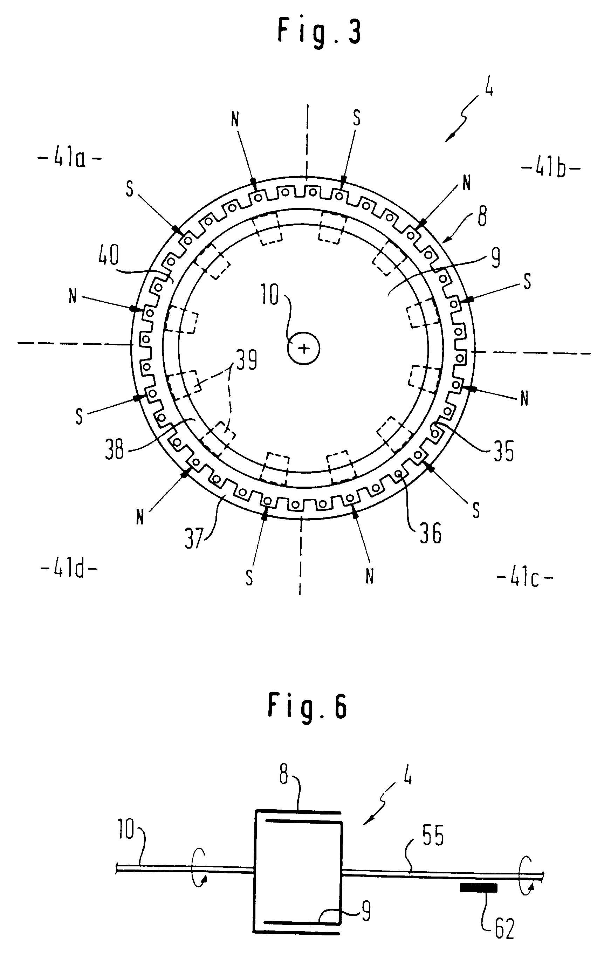

Die in Fig. 3 näher dargestellte elektrische Maschine 4 ist bürsten- bzw. schleiferlos und damit verschleißfrei. Sie hat einen Außendurchmesser von ungefähr 250 mm und eine Länge in Axialrichtung von 55 mm und erbringt bei einem Gewicht von 10-15 kg ein Dauerdrehmoment von ca. 50 Nm und ein Spitzendrehmoment von ca. 150 Nm. Sie kann Drehzahlen erreichen, die den Spitzendrehzahlen üblicher Verbrennungsmotoren (ca. 6000 bis 10000 U/min) entspricht und ist drehzahlfest bis 14000 U/min. Die elektrische Maschine 4 hat einen außenliegenden Ständer 8, welcher Nuten 35 in Richtung der Triebwelle 10 (Axialrichtung) aufweist. Der Ständer 8 trägt eine Drei-Phasen-Wicklung 36, die so ausgebildet ist, daß sie bei Beaufschlagung mit Drei-Phasen-Strom zwölf Pole ausbildet. Pro Pol sind drei Nuten 35, insgesamt also sechsunddreißig Nuten 35 vorhanden. (Bei anderen (nicht gezeigten) Ausführungsformen sind zwecks Verringerung von Streueffekten pro Pol wenigstens sechs, vorzugsweise neun Nuten vorhanden.) Die Pole laufen mit der Drehstrom-Oszillation in einer Kreisbewegung im Ständer 8 um. Für einen bestimmten Zeitpunkt ist ihre momentane Lage durch Pfeile, welche die Bezugszeichen "S" (für Südpol) und "N" (für Nordpol) tragen, veranschaulicht. Ein die Nuten 35 nach außen abschließender Rücken 37 ist in Radialrichtung relativ dünn, seine Dicke beträgt (an der Stelle einer Nut 35) vorzugsweise 3-25 mm. Der Ständer 8 ist aus dünnen Statorblechen (die Dicke beträgt hier 0,25 mm) aus einem Material mit niedrigen Ummagnetisierungsverlusten (hier kleiner als 1 W/kg bei 50 Hz und einem Tesla) aufgebaut, mit senkrecht zur Axialrichtung verlaufenden Blechebenen.

Der innenliegende Läufer 9 ist bei der Asynchron-Maschine als Käfigläufer mit im wesentlichen in Axialrichtung verlaufenden Käfigstäben, die jeweils stirnseitig mit einem Kurzschlußring 38 verbunden sind, ausgebildet. Beim der Synchronmaschine trägt der Läufer 9 eine entsprechende Zahl von Polen wie der Ständer 8 (hier zwölf Pole), die durch Permanentmagnete oder entsprechend erregte Spulen gebildet sein können. In Fig. 3 ist die Synchronmaschine ebenfalls veranschaulicht, indem die bei ihr vorhandenen Läuferpole (Bezugsziffer 39) schematisch angedeutet sind.

Der Luftspalt 40 zwischen Läufer 9 und Ständer 8 ist relativ groß; seine Weite beträgt 0,25 bis 2,5 mm, vorzugsweise 0,5 bis 1,5 mm.

Bei anderen (nicht gezeigten) Ausführungsformen ist der Läufer außenliegend und der Ständer innenliegend.

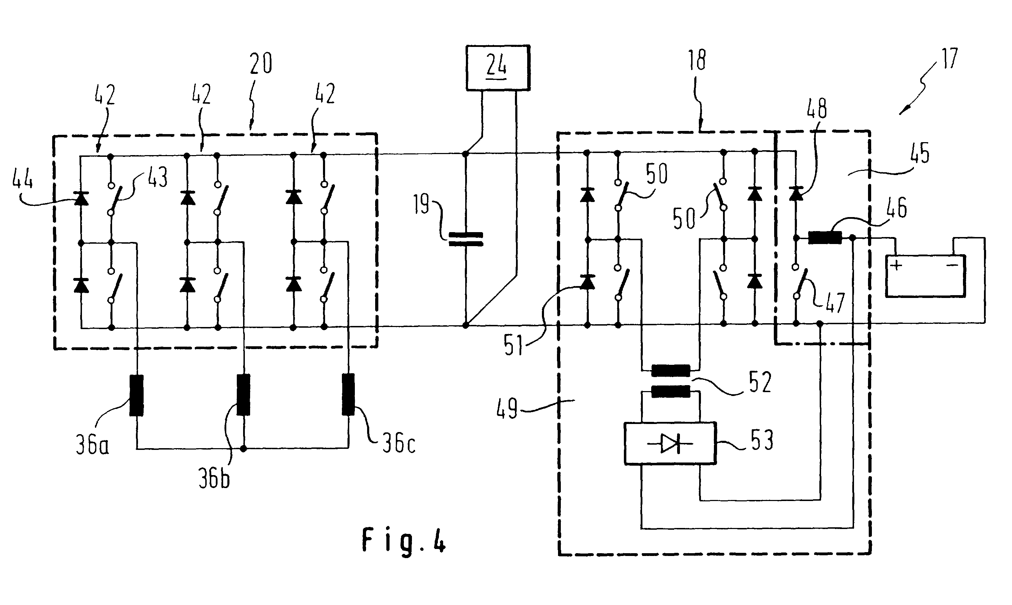

Fig. 4 zeigt einen schematischen Schaltplan des Wechselrichters 17. Man erkennt den Zwischenkreisspeicher 19 in Form einer Kapazität, welcher der (hier nicht näher dargestellte) Zusatzspeicher 24 parallelgeschaltet ist. Die Kapazität symbolisiert eine Parallelschaltung mehrerer Kondensatoren.

Der Maschinenwechselrichter 20 wird durch drei parallelgeschaltete (aber unabhängig schaltbare) Schaltergruppen 42 gebildet, wobei jede der Schaltergruppen 42 für die Erzeugung jeweils einer der drei Drei-Phasen-Spannungen zuständig ist. Jede der Schaltergruppen 42 ist eine Serienschaltung zweier (unabhängig schaltbarer) Schalter 43 zwischen dem Plus- und dem Minuspol des Zwischenkreises. Die Serienschaltung ist mittig (d.h. zwischen den Schaltern 43) mit einer Seite jeweils einer der drei Wicklungen 36a, 36b, 36c der Drei-Phasenwicklung 36 verbunden; an der anderen Seite sind die drei Wicklungen 36a, 36b, 36c miteinander verbunden.

Parallel zu den Schaltern 43 ist jeweils eine Freilaufdiode 44 geschaltet. Sie ist so gepolt, daß sie normalerweise sperrt und, nur wenn der gegenüberliegende Schalter geöffnet wird, einen aufgrund von Selbstinduktion erzeugten, kurzzeitigen Stromfluß in Gegenrichtung durchläßt.

Jeder Schalter 43 symbolisiert eine Parallelschaltung von mehreren (z.B. fünf) MOS-Feldeffektransistoren, welche von der Steuereinrichtung 31 zur Bildung eines Drei-Phasen-Stroms gewünschter Amplitude, Frequenz und Phase direkt angesteuert werden.

Der Gleichspannungsumsetzer 18 umfaßt zwei Unter-Baugruppen, nämlich eine, welche elektrische Energie von dem niedrigen Spannungsniveau (12 V) auf das hohe Zwischenkreis-Spannungsniveau (60 V bzw. 350 V) bringen kann, und eine andere, welche - umgekehrt - elektrische Energie von dem hohen Spannungsniveau (60 V bzw. 350 V) auf das niedrige Spannungsniveau (12 V) bringen kann. Bei Ausführungsformen mit im Zwischenkreis angeordneter Fahrzeugbatterie kann die erstgenannte Unter-Baugruppe entfallen.

Bei der ersten Unter-Baugruppe handelt es z.B. sich um einen Hochsetzsteller 45. Dieser wird durch eine Serienschaltung einer mit dem Pluspol der Fahrzeugbatterie 11 verbundenen Induktivität 46 und einen mit deren Minuspol und dem Minuspol des Zwischenkreises verbundenen Schalter 47 gebildet, wobei diese Serienschaltung mittig über eine (in Durchlaßrichtung gepolte) Hochsetzdiode 48 mit dem Pluspol des Zwischenkreises verbunden ist. Bei geschlossenem Schalter 47 fließt ein Kreisstrom vom Plus- zum Minus pol der Fahrzeugbatterie 11. Nach Öffnen des Schalters 47 sucht eine Selbstinduktionsspannung ein Zusammenbrechen dieses Stromes zu verhindern, mit der Folge, daß kurzzeitig das hohe Zwischenkreis-Spannungsniveau (60 V bzw. 350 V) überschritten wird und Strom durch die (ansonsten sperrende) Hochsetzdiode 48 fließt und den Zwischenkreisspeicher 19 auflädt. Durch periodisches Öffnen und Schließen des Schalters 47 erzielt man einen quasi-stationären Ladestrom, z.B. als Vorbereitung des Startvorgangs. Bei dem Schalter 47 handelt es sich um einen Halbleiterschalter, welcher direkt von der Steuereinrichtung 31 angesteuert wird.

Die zweite Unter-Baugruppe ist z.B. ein Spannungsuntersetzer 49, der ähnlich einem Schaltnetzteil funktioniert. Er umfaßt zwei Serienschaltungen von Schaltern 50 zwischen dem Plus- und Minuspol des Zwischenkreises, mit jeweils parallelgeschalteten Freilaufdioden 51. Die Enden einer Primärwicklung eines Hochfrequenz(HF)-Transformators 52 sind jeweils mit den Mitten dieser Serienschaltungen verbunden. Die Sekundärwicklung des HF-Transformators 52 speist eine Gleichrichtungs- und Glättungseinheit 53, welche wiederum die Fahrzeugbatterie 11 und ggf. Niederspannungsverbraucher 23 speist. Die Schalter 50 symbolisieren Halbleiterschalter, welche direkt von der Steuereinrichtung 31 angesteuert werden. Durch periodisches Öffnen und Schließen der Schalter läßt sich ein hochfrequenter Wechselstrom erzeugen, welcher in der Sekundärwicklung des HF-Transformators 52 eine entsprechende Wechselspannung auf niedrigerem Spannungsniveau induziert, welche durch die Einheit 53 gleichgerichtet und geglättet wird. Der genaue Wert der resultierenden Gleichspannung läßt sich mit Hilfe der Schalter 50 durch Variation der Schaltfrequenz genau einstellen.

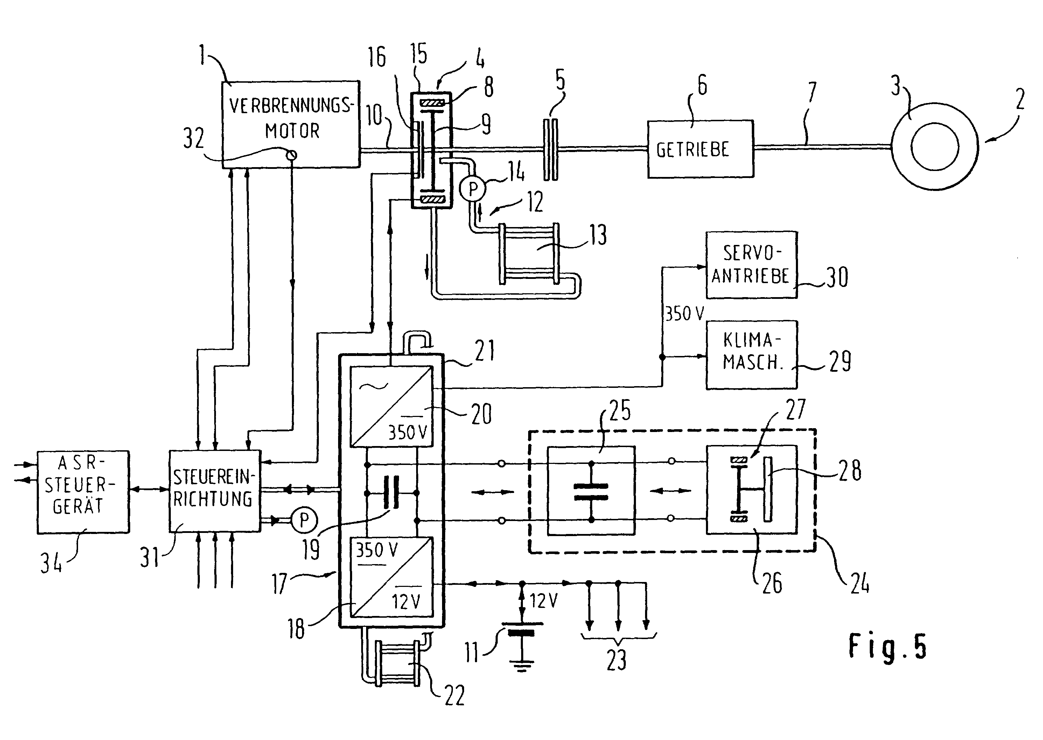

Das in Fig. 5 dargestellte Antriebssystem unterscheidet sich von den anhand der Fig. 1-4 dargestellten Ausführungsformen dadurch, daß hier - zusätzlich zu gemeinsamen Nutzung verschiedener Sensoren - auch die Steuerung des Verbrennungsmotors 1 und der elektrischen Maschine 4 durch eine gemeinsame Steuereinrichtung erfolgt.

Und zwar übernimmt hier die Steuereinrichtung 31 (Mikrocomputer-Steuergerät) die Steueraufgaben des Verbrennungsmotor-Steuergeräts 33 von Fig. 2, welches deshalb hier entfallen kann. Die Steuereinrichtung 31 steuert einerseits - wie oben erläutert - die Wechselrichterschalter 43, 47, 50, derart, daß die elektrische Maschine 4 das gewünschte Drehmoment (Wechseldrehmoment, ggf. mit global überlagertem Drehmoment für Generatorfunktion, Bremsen, generatorisches Bremsen, Beschleunigen, sowie ggf. Drehmoment für Starterfunktion) erzeugt, und führt die Start-Stop-Steuerung durch. Andererseits steuert sie den Verbrennungsmotor wie ein Motormanagementsystem, d.h. sie steuert die Kraftstoffzufuhr, Drosselklappenstellung (insbesondere im Leerlauf), Kraftstoffeinspritzung (Zeitpunkt und Menge) Zündung (Zeitpunkt), Ventile (Öffnungs- und Schließzeitpunkte), Kühlung des Verbrennungsmotors 1 (insbesondere durch Steuerung der Kühlmitteltemperatur), Abgasrückführung (z.B. durch Steuerung eines Abgas-Rückführungsventils), und dadurch Drehzahl (insbesondere im Leerlauf), Drehmoment, Leistung, Kraftstoffverbrauch und Abgaszusammensetzung des Verbrennungsmotors 1.

Die Steuerung des Verbrennungsmotors 1 und der Start-Stop-Automatik erfolgt in Abhängigkeit von verschiedenen veränderlichen Größen: Zum einen in Abhängigkeit von benutzergesteuerten Größen, wie Fahrpedalstellung (und damit ggf. Drosselklappenstellung), vorgewählte Fahrgeschwindigkeit, gewählte Getriebe-Gangstufe, Brems- und Kupplungsbetätigung und Fahrcharakteristik in der Fahr-Vorgeschichte (z.B. sportliche Fahrcharakteristik); zum anderen Betriebsgrößen, wie Drehzahl, Kurbelwellenwinkel, Drehmoment, Gasdruck, Klopfen, Antriebsschlupf, Kühlmitteltemperatur, Abgaszusammensetzung, Fahrgeschwindigkeit. All diese Steueraufgaben werden von der sehr leistungsfähigen Steuereinrichtung 31 zur Drehungleichförmigkeits-verringerung mit übernommen.

Bei anderen (nicht gezeigten) Ausführungsformen übernimmt ein - von einem herkömmlichen Motor-Managementsystem abgeleitetes - Motor-Steuergerät (ähnlich 33 in Fig.2) die Steuerung der Drehungleichförmigkeits-verringerung. Dort kann daher die Steuereinrichtung 31 entfallen.

Eine elektrische Einzelmaschine 4 gemäß Fig. 6, welche die Funktion einer elektromagnetischen Kupplung und/oder Synchronisiereinrichtung für ein nachgeschaltetes Getriebe hat, weist ein inneres und ein äußeres elektromagnetisches Wirkelement auf, die in Anlehnung an bei elektrischen Maschinen üblichen Bezeichnungsweisen hier Läufer 9 und Ständer 8' genannt werden. Der Läufer 9 ist drehfest mit der Abtriebswelle 55 und der Ständer 8' ist drehfest mit der Triebwelle 10 verbunden (bei anderen - nicht gezeigten - Ausführungsformen ist diese Zuordnung umgekehrt). Die elektrische Maschine 4 ist also zusätzlich zur Läuferdrehung als Ganzes drehbar; der Begriff "Ständer" ist also angesichts dessen Drehbarkeit nur in einem übertragenen Sinn zu verstehen. Während es bei einer feststehenden elektrischen Maschine - z.B. einer Drehfeld-Maschine - möglich ist, die Stromzufuhr auf das feststehende Wirkelement (d.h. den Ständer) zu beschränken und im drehbaren Wirkelement (d.h. im Läufer) Ströme ohne Stromzufuhr nur durch Induktion hervorzurufen, wird hier - wo beide Wirkelemente drehbar sind - wenigstens einem von ihnen (hier dem Ständer 8') Strom über drehbewegliche elektrische Verbindungen (z.B. über hier nicht gezeigte Schleifer/Schleifring-Kontakte) zugeführt. Die Abtriebswelle 55 ist mit einer mechanischen Kupplung, hier einer gegen das Fahrzeugchassis oder das Getriebegehäuse abgestützten Bremse 62 gegen Drehung festlegbar. Die gezeigte Ausführungsform hat keine Überbrükkungskupplung, andere (nicht gezeigte) Ausführungsformen sind jedoch mit einer reib- oder kraftschlüssigen Überbrückungskupplung zur mechanischen Verbindung der Wellen 10, 55 ausgerüstet. Die Maschine 4 kann im oder am Motorgehäuse, Getriebegehäuse oder an beliebiger anderer Stelle im Antriebsstrang 2 plaziert sein.

Die elektrische Einzelmaschine 4 kann verschiedene Funktionen ausführen. In der Funktion als Schaltkupplung und ggf. als Anfahrkupplung wird ein Gleichlauf der Wellen 10, 55 durch eine solche Einstellung der drehmomenterzeugenden magnetischen Felder der Maschine 4 erzielt, daß Drehzahlgleichheit zwischen den Wellen 10 und 55 herrscht, also der Kupplungsschlupf zwischen Ständer 8' und Läufer 9 genau verschwindet. Bei einer Asynchronmaschine wird dies beispielsweise durch die Regelung bzw. Steuerung des magnetischen Schlupfes eines entgegen der Antriebsdrehmoment-Richtung umlaufenden Drehfelds geeigneter Frequenz und Amplitude erzielt. Eine (hier nicht dargestellte) formschlüssige Überbrückungskupplung eliminiert bei verschwindendem Kupplungsschlupf die elektromagnetischen Verluste.

Eine aktive Getriebesynchronisierung dient dazu, die Abtriebswelle 55 während eines Gangwechsels so zu beschleunigen oder abzubremsen, daß die in Kämmung zu bringenden Getriebezahnräder gleiche Umfanggeschwindigkeiten haben. Diese Funktion kann bei Ausführungsformen der Einzelmaschine 4 auch ohne Kupplungsfunktion realisiert sein. Die Wellenbeschleunigung oder -abbremsung erfolgt in Abstützung gegen die mit der variablen Drehzahl des Verbrennungsmotors 1 drehende Triebwelle 10. Der Beitrag dieser Drehung wird bei der Bestimmung und Steuerung der für die jeweilige Synchronisation nötigen Relativdrehzahl der Maschine 4 berücksichtigt.

Eine Verringerung von Drehungleichförmigkeiten der Triebwelle 10 kann im Stand des Fahrzeugs in Abstützung gegen den dann mit Hilfe der Bremse 62 gegen Drehung festgelegten Läufer 9 erfolgen. Bei angetriebener Fahrt können bei nicht eingekuppelter (oder nicht vorhandener) Überbrückungskupplung Drehungleichförmigkeiten der Abtriebswelle 55 durch schnelles Variieren des übertragenen Drehmoments verringert werden, und zwar durch dessen Verkleinerung (d.h. einer Vergrößerung des Kupplungsschlupfes) bei positiver Drehungleichförmigkeit und dessen Vergrößerung (d.h. einer Verkleinerung des Kupplungsschlupfes) bei negativer.

Zusatzbeschleunigung oder -bremsung ist bei nicht eingekuppelter Überbrückungskupplung durch Erzeugung entsprechenden Drehmomente - oder anders ausgedrückt - kleineren oder größeren Kupplungsschlupfes möglich. Die elektrische Maschine 4 kann in eine ASR-Regelung derart einbezogen sein, daß bei zu großem Antriebsrad-Schlupf der Kupplungsschlupf augenblicklich vergrößert und damit das an den Antriebsrädern anliegende Moment verkleinert wird. Eine Generatorfunktion zur Stromerzeugung wird durch dauernd aufrechterhaltenen Kupplungsschlupf erzielt.

Die elektrische Maschine 4 kann den Verbrennungsmotors 1 direkt in Abstützung gegen die durch die Bremse 62 festgelegte Abtriebswelle 55 starten. Bei einer anderen Ausführungsform, bei der die Maschine 4 hierfür kein ausreichendes Drehmoment aufbringt, kann sie unter Ausnutzung der elektromagnetischen Kupplungsfunktion als verschleißfreier Schwungradstarter dienen. Hierzu beschleunigt die elektrische Maschine 4 zunächst bei nicht eingelegtem Gang und gelöster Bremse 62 den dann freilaufenden Läufer 9 zusammen mit der Abtriebswelle 55 in Abstützung gegen die Triebwelle 10 und die Kompression des noch nicht laufenden Verbrennungsmotors 1 auf eine relativ hohe Drehzahl, z.B. auf 2000 U/min. Dann wird die elektrische Maschine 4 innerhalb kurzer Zeit so umgesteuert, daß sie ein bremsendes Moment, also Kraftschluß zwischen dem Läufer 9 und dem Ständer 8' herstellt. Dadurch werden der Läufer 9 mit der Abtriebswelle 55 und der Ständer 8' mit der Triebwelle 10 schnell auf eine gemeinsame mittlere Drehzahl (z.B. 800 U/min) gebracht und der Verbrennungsmotor 1 gestartet.

## Patentansprüche

1. Antriebssystem, insbesondere für ein Kraftfahrzeug, mit
- einem Verbrennungsmotor (1),
- einer auf die Kurbelwelle (10) des Verbrennungsmotors (1) oder eine damit gekoppelten Welle wirkenden elektrischen Maschine (4) zur aktiven Dämpfung von Drehungleichförmigkeiten, wobei die elektrische Maschine (4) eine durch einen Wechselrichter (17) gesteuerte Drehstrommaschine ist, und
- einem Mikrocomputer-Steuergerät (31), welches sowohl den Verbrennungsmotor (1) als auch den Wechselrichter (17) der aktivdämpfenden elektrischen Maschine (4) steuert.

2. Antriebssystem, insbesondere für ein Kraftfahrzeug, mit
- einem Verbrennungsmotor (1),
- einer auf die Kurbelwelle (10) des Verbrennungsmotors (1) oder einer damit gekoppelten Welle wirkenden elektrischen Maschine (4) zur aktiven Dämpfung von Drehungleichförmigkeiten, wobei die elektrische Maschine (4) durch einen Wechselrichter (17) mit einer Taktfrequenz von wenigstens 10 kHz gesteuert wird,
- einem Kurbelwellenwinkelsensor (16) mit einer Genauigkeit von wenigstens 0,5 Grad,
wobei die vom Kurbelwellenwinkelsensor (16) gelieferte Information sowohl der Steuerung des Verbrennungsmotors (1) als auch der Steuerung der elektrischen Maschine (4) dient.

3. Antriebssystem nach Anspruch 1, bei welchem das Mikrocomputer-Steuergerät (31) die elektrische Maschine (4) und den Verbrennungsmotor (1) nur während bestimmter Betriebszustände steuert, insbesondere während Leerlaufbetriebs des Verbrennungsmotors (1).

4. Antriebssystem nach Anspruch 1 oder 3, bei welchem das Mikrocomputer-Steuergerät (31) im Rahmen der Steuerung des Verbrennungsmotors (1) eine oder mehrere der folgenden Steueraufgaben übernimmt: Kraftstoffzufuhrsteuerung, Drosselklappensteuerung, insbesondere im Leerlauf, Kraftstoffeinspritz-Steuerung, Zündungssteuerung, Ventilsteuerung, Kühlungssteuerung, Abgasreinigungssteuerung, Klopfregelung, Ladedruckregelung, Abgasrückführungssteuerung, Zylinderabschaltung, Start-Stop-Steuerung, Getriebesteuerung.

5. Antriebssystem nach einem der vorhergehenden Ansprüche, bei welchem die elektrische Maschine (4) außerdem die Funktion eines Starters und/oder die Funktion eines Generators zur Stromversorgung hat.

6. Antriebssystem nach einem der vorhergehenden Ansprüche, bei welchem das Dämpfen so erfolgt, daß die elektrische Maschine (4) ein schnell alternierendes, und zwar bei einer positiven Drehungleichförmigkeit ein bremsendes und bei einer negativen Drehungleichförmigkeit ein antreibendes Drehmoment erzeugt, dem sie zur zusätzlichen Erzielung einer antreibenden Wirkung oder der bremsenden generatorischen Wirkung ein positives bzw. negatives Drehmoment überlagert.

7. Antriebssystem nach Anspruch 5 oder 6, bei welchem beim Dämpfen einer positiven Drehungleichförmigkeit gewonnene Energie (Drehungleichförmigkeits-Bremsenergie) sowie ggf. bei bremsendem Zusatz-Drehmoment gewonnene Energie (Zusatzdrehmoment-Bremsenergie) wenigstens teilweise gespeichert wird und die gespeicherte Drehungleichförmigkeits-Bremsenergie wenigstens teilweise zum Verringern einer negativen Drehungleichförmigkeit wiederverwendet wird.

8. Antriebssystem nach einem der vorhergehenden Ansprüche, bei welchem die elektrische Maschine (4) durch Beschleunigen und/oder Abbremsen einer mit ihr gekoppelten Welle ein Fahrzeug beschleunigt bzw. abbremst und/oder im Rahmen einer Anti-Schlupf-Regelung durch Bremsen den Schlupf eines Antriebsrades verringert.

9. Antriebssystem nach einem der vorhergehenden Ansprüche, bei welchem die elektrische Maschine (4) Strom auf relativ hohem Spannungsniveau liefert, und Hochleistungsverbraucher, wie Klimamaschinen (29), Servoantriebe (30), Pumpen, und Heizungen elektrisch auf dem hohen Spannungsniveau angetrieben bzw. gespeist werden.

10. Antriebssystem nach einem der Ansprüche 5 bis 9, bei welchem das Dämpfen von Drehungleichförmigkeiten durch Regelung, Steuerung, und zwar insbesondere Kennfeldsteuerung, adaptive Steuerung, und/oder Mischformen hiervon erfolgt.

11. Antriebssystem nach einem der vorhergehenden Ansprüche, bei welchem die elektrische Maschine (4) eine hohe Drehmomentdichte - bezogen auf das maximale Drehmoment - aufweist, insbesondere größer als 0,01 Nm/cm³.

12. Antriebssystem nach einem der vorhergehenden Ansprüche, bei welchem elektronische Schalter (43, 47, 50) des Wechselrichters (17) fluidgekühlt, insbesondere siedebadgekühlt, sind.

## Claims

1. A drive system, especially for a motor vehicle, with
- an internal combustion engine (1),
- an electric machine (4) for actively dampening rotational non-uniformities, acting on the crankshaft (10) of the internal combustion engine (1) or a shaft coupled thereto, wherein the electric machine (4) is a rotary-current machine controlled by an invertor (17), and
- a microcomputer control unit (31) which controls both the internal combustion engine (1) and also the invertor (17) of the actively dampening electric machine (4).

2. A drive system, especially for a motor vehicle, with
- an internal combustion engine (1),
- an electric machine (4) for actively dampening rotational non-uniformities, acting on the crankshaft (10) of the internal combustion engine (1) or a shaft coupled thereto, wherein the electric machine (4) is controlled by an invertor (17) having a clock frequency of at least 10 kHz,
- a crankshaft angle sensor (16) with a precision of at least 0.5 degrees,
wherein the information provided by the crankshaft angle sensor (16) serves both to control the internal combustion engine (1) and also to control the electric machine (4).

3. A drive system according to Claim 1, in which the microcomputer control unit (31) controls the electric machine (4) and the internal combustion engine (1) only during certain operating states, especially during idling operation of the internal combustion engine (1).

4. A drive system according to Claim 1 or 3, in which the microcomputer control unit (31) takes over, in the framework of controlling the internal combustion engine (1), one or more of the following control tasks: fuel supply control, throttle valve control, especially in idling, fuel injection control, ignition control, valve control, cooling control, exhaust gas cleaning control, knocking regulation, charging pressure regulation, exhaust gas recycling control, cylinder shutdown, start/stop control, transmission control.

5. A drive system according to one of the preceding Claims, in which the electric machine (4) also has the function of a starter and/or the function of a generator for power supply.

6. A drive system according to one of the preceding Claims, in which the dampening occurs so that the electric machine (4) generates a rapidly alternating torque, namely, a braking torque for a positive rotational non-uniformity and a driving torque for a negative rotational non-uniformity, onto which it superimposes a positive or negative torque, respectively, in order to additionally accomplish a driving action or the braking, generator-type action.

7. A drive system according to Claim 5 or 6, in which energy obtained when dampening a positive rotational non-uniformity (rotational non-uniformity brake energy) and also, where appropriate, energy obtained during the auxiliary braking torque (auxiliary torque brake energy) is at least partly stored and the stored rotational non-uniformity brake energy is at least partly reused to reduce a negative rotational non-uniformity.

8. A drive system according to one of the preceding Claims, in which the electric machine (4) accelerates or brakes, respectively, a vehicle by accelerating and/or braking a shaft coupled thereto and/or reduces the slip of a drive wheel by braking in the context of an anti-slip control system.

9. A drive system according to one of the preceding Claims, in which the electric machine (4) furnishes current at relatively high voltage level, and high-power consumers, such as air conditioners (29), servo-drives (30), pumps and heating systems, are electrically operated or energized at the high voltage level.

10. A drive system according to one Claims 5 to 9, in which the dampening of rotational non-uniformities occurs by closed-loop control, open-loop control, in particular characteristic-diagram control, adaptive open-loop control, and/or mixed forms thereof.

11. A drive system according to one of the preceding Claims, in which the electric machine (4) has a high torque density - in terms of the maximum torque - in particular, greater than 0.01 Nm/cm³.

12. A drive system according to one of the preceding Claims, in which electronic switches (43, 47, 50) of the invertor (17) are fluid cooled, in particular, boiling bath cooled.

## Revendications

1. Système d'entraînement, en particulier pour un véhicule à moteur, comportant:
- un moteur à combustion interne (1)
- une machinc électrique (4), agissant sur le vilebrequin (10) du moteur à combustion interne (1), ou sur un arbre qui lui est couplé, pour l'amortissement actif d'irrégularités de rotation, dans lequel la machine électrique (4) est une machine à courant triphasé commandée par un onduleur (17), et
- un appareil de commande du type micro-ordinateur (31) qui commande aussi bien le moteur à combustion interne (1) que l'onduleur (17) de la machine électrique (4) opérant l'amortissement actif.

2. Système d'entraînement, en particulier pour un véhicule à moteur, comportant:
- un moteur à combustion interne (1)
- une machine électrique (4), agissant sur le vilebrequin (10) du moteur à combustion interne (1), ou sur un arbre qui lui est couplé, pour l'amortissement actif d'irrégularités de rotation, dans lequel la machine électrique (4) est commandée par un onduleur (17) d'une fréquence d'horloge d'au moins 10 kHz,
- un détecteur d'angle du vilebrequin (16) d'une précision d'au moins 0,5 degré,
dans lequel l'information fournie par le détecteur d'angle du vilebrequin (16) sert aussi bien à la commande du moteur à combustion interne (1) qu'à la commande de la machine électrique (4).

3. Système d'entraînement selon la revendication 1, dans lequel l'appareil de commande du type micro-ordinateur (31) ne commande la machine électrique (4) et le moteur à combustion interne (1) que pendant des états de marche déterminés, en particulier pendant la marche en ralenti du moteur à combustion interne (1).

4. Système d'entraînement selon la revendication 1 ou 3, dans lequel l'appareil de commande du type micro-ordinateur (31) assume, dans le cadre de la commande du moteur à combustion interne (1), une ou plusieurs des missions de commande suivantes: commande de l'amenée du carburant, commande du papillon des gaz, en particulier au ralenti, commande de l'injection du carburant, commande de l'allumage, commande des soupapes, commande du refroidissement, commande de l'épuration des gaz d'échappement, régulation du cognement, régulation de la pression de charge, commande du rétropassage des gaz d'échappement, mise hors circuit d'un cylindre, commande démarrage-arrêt, commande de la boîte de vitesses.

5. Système d'entraînement selon l'une des revendications précédentes, dans lequel la machine électrique (4) a en outre la fonction d'un démarreur et/ou la fonction d'une génératrice pour l'alimentation en courant.

6. Système d'entraînement selon l'une des revendications précédentes, dans lequel l'amortissement se fait par le fait que la machine électrique (4) produit un moment de rotation alternant rapidement et, de façon plus précise, dans le cas d'une irrégularité de rotation positive, un moment de rotation de freinage et, dans le cas d'une irrégularité de rotation négative, un moment de rotation d'entraînement, auquel elle superpose, pour obtenir en supplément une action d'entraînement ou une action de frein ou de génératrice, un moment de rotation positif ou négatif.

7. Système d'entraînement selon la revendication 5 ou 6, dans lequel l'énergie récupérée lors de l'amortissement d'une irrégularité de rotation positive (énergie de freinage d'une irrégularité de rotation) ainsi qu'éventuellement l'énergie récupérée lors d'un moment de rotation supplémentaire de freinage (énergie de freinage résultant d'un moment de rotation supplémentaire) est au moins partiellement accumulée et l'énergie de freinage d'irrégularité de rotation, accumulée, est au moins partiellement réemployée pour diminuer une irrégularité de rotation négative.

8. Système d'entraînement selon l'une des revendications précédentes, dans lequel la machine électrique (4), en accélérant et/ou en freinant un arbre qui lui est couplé, accélére ou freine un véhicule et/ou diminue le patinage d'une roue motrice dans le cadre d'une régulation antipatinage par freinage.

9. Système d'entraînement selon l'une des revendications précédentes, dans lequel la machine électrique (4) fournit du courant à un niveau de tension relativement élevé et dans lequel des récepteurs de puissance élevée, comme des machines de climatisation (29), des servomécanismes d'entraînement (30), des pompes et des chauffages sont entraînés ou alimentés électriquement à ce niveau de tension élevé.

10. Système d'entraînement selon l'une des revendications 5 à 9, dans lequel l'amortissement des irrégularités de rotation se fait par régulation, par commande et de façon plus précise en particulier par commande par champ de caractéristiques, par commande adaptative et/ou par des formes mixtes.

11. Système d'entraînement selon l'une des revendications précédentes, dans lequel la machine électrique (4) présente une densité de moment de rotation élevée - rapportée au moment de rotation maximal - en particulier supérieure à 0,01 Nm/cm³.

12. Système d'entraînement selon l'une des revendications précédentes, dans lequel les interrupteurs électroniques (43, 47, 50) de l'onduleur (17) sont refroidis par un fluide, en particulier refroidis par un bain porté à ébullition.
